# EUROPEAN PATENT SPECIFICATION

(11) **EP 4 437 789 B1**
(45) Date of publication and mention of the grant of the patent: **23.09.2026**
(21) Application number: 22934321.5
(22) Date of filing: 01.04.2022
(51) Int. Cl.: H04L 1/18, H04L 1/1607, H04L 1/1867, H04W 72/04, H04L 5/00

(54) **METHOD AND APPARATUS FOR MULTIPLEXING HARQ-ACK FEEDBACK FOR MULTICAST SERVICE ON PUSCH**
VERFAHREN UND VORRICHTUNG ZUM MULTIPLEXEN VON HARQ-ACK-RÜCKKOPPLUNG FÜR MULTICAST-DIENST AUF PUSCH
PROCÉDÉ ET APPAREIL DE MULTIPLEXAGE DE RÉTROACTION HARQ-ACK POUR UN SERVICE DE MULTIDIFFUSION SUR UN PUSCH

(43) Date of publication of application: 02.10.2024
(73) Proprietor: Lenovo (Beijing) Limited, Beijing 100085 (CN)
(72) Inventor: LEI, Haipeng, Beijing 100094 (CN)
(74) Representative: Openshaw & Co.
(86) International application number: PCT/CN2022/084819
(87) International publication number: WO 2023/184485

(56) References cited:
- WO-A1-2021/071702
- WO-A1-2021/213203
- CN-A- 114 157 398
- US-A1- 2020 022 144
- US-A1- 2020 106 566
- US-A1- 2021 014 647
- US-A1- 2021 111 835
- INTEL CORPORATION: "NR MBS Group Scheduling for RRC_CONNECTED UEs", 3GPP DRAFT; R1-2100674, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. e-Meeting; 20210125 - 20210205, 19 January 2021 (2021-01-19), Mobile Competence Centre ; 650, route des Lucioles ; F-06921 Sophia-Antipolis Cedex ; France , XP051971144

## Description

### TECHNICAL FIELD

Embodiments of the present disclosure generally relate to wireless communication technology, and more particularly to multiplexing hybrid automatic repeat request acknowledgement (HARQ-ACK) feedback for a multicast service on a physical uplink shared channel (PUSCH).

### BACKGROUND

Wireless communication systems are widely deployed to provide various telecommunication services, such as telephony, video, data, messaging, broadcasts, and so on. Wireless communication systems may employ multiple access technologies capable of supporting communication with multiple users by sharing available system resources (e.g., time, frequency, and power). Examples of wireless communication systems may include fourth generation (4G) systems, such as long term evolution (LTE) systems, LTE-advanced (LTE-A) systems, or LTE-A Pro systems, and fifth generation (5G) systems which may also be referred to as new radio (NR) systems.

In a wireless communication system, a user equipment (UE) may monitor a physical downlink control channel (PDCCH) in one or more search spaces. The PDCCH may carry downlink control information (DCI), which may schedule uplink channels, such as a physical uplink shared channel (PUSCH), or downlink channels, such as a physical downlink shared channel (PDSCH). A UE may transmit hybrid automatic repeat request acknowledgement (HARQ-ACK) feedback (e.g., included in a HARQ-ACK codebook) corresponding to PDSCH transmissions through a physical uplink control channel (PUCCH) or a physical uplink shared channel (PUSCH).

There is a need for handling HARQ-ACK feedback multiplexing on a PUSCH in a wireless communication system.

WO2021213203A1 discloses a hybrid automatic repeat request acknowledgement (HARQ-ACK) feedback method. The method comprises: receiving broadcast multicast scheduling signaling sent by a base station, and determining an uplink resource corresponding to unicast; and when it is detected that a preset condition is met, multiplexing a first HARQ-ACK codebook corresponding to the broadcast multicast scheduling signaling onto the uplink resource corresponding to the unicast, wherein the preset condition is that a HARQ-ACK feedback time slot indicated by the broadcast multicast scheduling signaling and a time slot in which the uplink resource is located exist in a preset window at the same time.

### SUMMARY

The invention is defined by the appended independent claims.

One aspect of the present disclosure provide a user equipment according to appended independent claim 1.

One aspect of the present disclosure provide a base station according to appended independent claim 14.

One aspect of the present disclosure provide a method for wireless communication performed by a UE according to appended independent claim 15.

Further advantageous embodiments are set out in the appended dependent claims.

### BRIEF DESCRIPTION OF THE DRAWINGS

In order to describe the manner in which the advantages and features of the disclosure can be obtained, a description of the disclosure is rendered by reference to specific embodiments thereof, which are illustrated in the appended drawings. These drawings depict only exemplary embodiments of the disclosure and are not therefore to be considered limiting of its scope.
FIG. 1 illustrates a schematic diagram of a wireless communication system in accordance with some embodiments of the present disclosure;
FIGS. 2 and 3 illustrate a schematic diagram of HARQ-ACK codebook determination in accordance with some embodiments of the present disclosure;
FIG. 4 illustrates a schematic diagram of HARQ-ACK codebook determination in accordance with some embodiments of the present disclosure;
FIGS. 5 and 6 illustrate a flow chart of an exemplary procedure of wireless communications in accordance with some embodiments of the present disclosure; and
FIG. 7 illustrates a block diagram of an exemplary apparatus in accordance with some embodiments of the present disclosure.

### DETAILED DESCRIPTION

The detailed description of the appended drawings is intended as a description of the preferred embodiments of the present disclosure and is not intended to represent the only form in which the present disclosure may be practiced.

Reference will now be made in detail to some embodiments of the present disclosure, examples of which are illustrated in the accompanying drawings. To facilitate understanding, embodiments are provided under a specific network architecture(s) and new service scenarios, such as the 3rd generation partnership project (3GPP) 5G (NR), 3GPP long-term evolution (LTE) Release 8, and so on. It is contemplated that along with the developments of network architectures and new service scenarios, all embodiments in the present disclosure are also applicable to similar technical problems; and moreover, the terminologies recited in the present disclosure may change, which should not affect the principles of the present disclosure.

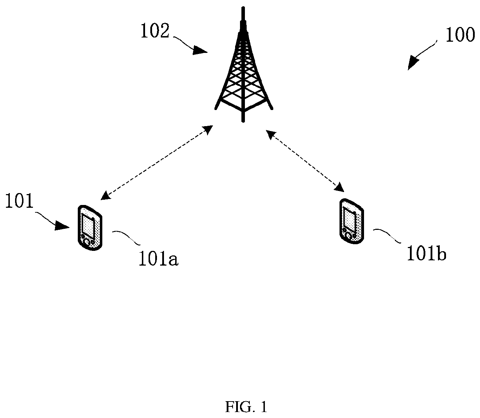

FIG. 1 illustrates a schematic diagram of a wireless communication system 100 in accordance with some embodiments of the present disclosure.

As shown in FIG. 1, wireless communication system 100 may include some UEs 101 (e.g., UE 101a and UE 101b) and a base station (e.g., BS 102). Although a specific number of UEs 101 and BS 102 are depicted in FIG. 1, it is contemplated that any number of UEs and BSs may be included in the wireless communication system 100.

The UE(s) 101 may include computing devices, such as desktop computers, laptop computers, personal digital assistants (PDAs), tablet computers, smart televisions (e.g., televisions connected to the Internet), set-top boxes, game consoles, security systems (including security cameras), vehicle on-board computers, network devices (e.g., routers, switches, and modems), or the like. According to some embodiments of the present disclosure, the UE(s) 101 may include a portable wireless communication device, a smart phone, a cellular telephone, a flip phone, a device having a subscriber identity module, a personal computer, a selective call receiver, or any other device that is capable of sending and receiving communication signals on a wireless network. In some embodiments of the present disclosure, the UE(s) 101 includes wearable devices, such as smart watches, fitness bands, optical head-mounted displays, or the like. Moreover, the UE(s) 101 may be referred to as a subscriber unit, a mobile, a mobile station, a user, a terminal, a mobile terminal, a wireless terminal, a fixed terminal, a subscriber station, a user terminal, or a device, or described using other terminology used in the art. The UE(s) 101 may communicate with the BS 102 via uplink (UL) communication signals.

The BS 102 may be distributed over a geographic region. In certain embodiments of the present disclosure, the BS 102 may also be referred to as an access point, an access terminal, a base, a base unit, a macro cell, a Node-B, an evolved Node B (eNB), a gNB, a Home Node-B, a relay node, or a device, or described using other terminology used in the art. The BS 102 is generally a part of a radio access network that may include one or more controllers communicably coupled to one or more corresponding BSs 102. The BS 102 may communicate with UE(s) 101 via downlink (DL) communication signals.

The wireless communication system 100 may be compatible with any type of network that is capable of sending and receiving wireless communication signals. For example, the wireless communication system 100 is compatible with a wireless communication network, a cellular telephone network, a time division multiple access (TDMA)-based network, a code division multiple access (CDMA)-based network, an orthogonal frequency division multiple access (OFDMA)-based network, an LTE network, a 3GPP-based network, a 3GPP 5G network, a satellite communications network, a high altitude platform network, and/or other communications networks.

In some embodiments of the present disclosure, the wireless communication system 100 is compatible with 5G NR of the 3GPP protocol. For example, BS 102 may transmit data using an orthogonal frequency division multiple (OFDM) modulation scheme on the DL and the UE(s) 101 may transmit data on the UL using a discrete Fourier transform-spread-orthogonal frequency division multiplexing (DFT-S-OFDM) or cyclic prefix-OFDM (CP-OFDM) scheme. More generally, however, the wireless communication system 100 may implement some other open or proprietary communication protocols, for example, WiMAX, among other protocols.

In some embodiments of the present disclosure, the BS 102 and UE(s) 101 may communicate using other communication protocols, such as the IEEE 802.11 family of wireless communication protocols. Further, in some embodiments of the present disclosure, the BS 102 and UE(s) 101 may communicate over licensed spectrums, whereas in some other embodiments, the BS 102 and UE(s) 101 may communicate over unlicensed spectrums. The present disclosure is not intended to be limited to the implementation of any particular wireless communication system architecture or protocol.

In some embodiments of the present disclosure, a wireless communication system may support multicast and broadcast services (MBSs). For example, one or more UEs (e.g., UE 101a and UE 101b) may be grouped as an MBS group to receive an MBS(s) (e.g., an MBS PDSCH) from a BS (e.g., BS 102).

A group-common radio network temporary identifier (RNTI) (e.g., group-RNTI (G-RNTI)) is introduced for an MBS so that a UE can differentiate a DCI scheduling a group-common PDSCH carrying an MBS service (e.g., an MBS PDSCH) from a DCI scheduling UE-specific PDSCH carrying a unicast service. For example, the cyclic redundancy check (CRC) of the DCI scheduling the unicast PDSCH may be scrambled by a UE-specific RNTI (e.g., cell-RNTI (C-RNTI)) and the scheduled unicast PDSCH may also be scrambled by the UE-specific RNTI. The CRC of the DCI scheduling the group-common PDSCH may be scrambled by a G-RNTI and the scheduled group-common PDSCH carrying the MBS may also be scrambled by the G-RNTI. When a UE supports multiple MBS services, each service may be configured with a G-RNTI specific to the service. In other words, from a UE's perspective, the G-RNTIs can be used to differentiate the multiple MBS services.

In the context of the present disclosure, a group-common RNTI (e.g., G-RNTI) may be referred to as a multicast RNTI, and a DCI with a CRC scrambled by a group-common RNTI may be referred to as "a group-common DCI" or "a multicast DCI". A PDSCH scrambled by a group-common RNTI may be referred to as "a group-common PDSCH" or "a multicast PDSCH". HARQ-ACK information associated with a multicast DCI format or a multicast PDSCH may be referred to as multicast HARQ-ACK information.

In some examples, DCI format 4_0 may be used for the scheduling of a PDSCH for broadcast in a DL cell. Each field size of DCI format 4_0 may be fixed. Zeros may be appended to DCI format 4_0 until the payload size equals that of DCI format 1_0 monitored in a common search space in the same serving cell. DCI format 4_1 may be used for the scheduling of a PDSCH for multicast in a DL cell. Each field size of DCI format 4_1 may be fixed. Padding bits (e.g., zeros) may be appended to DCI format 4_1 until the payload size equals that of DCI format 1_0 monitored in a common search space in the same serving cell. DCI format 4_2 may be used for the scheduling of a PDSCH for multicast in a DL cell. At least one field size of DCI format 4_2 may be configurable as a non-fallback DCI. The size of DCI format 4_2 may be configurable by a higher layer parameter(s) from, for example, 20 bits and up to, for example, 140 bits.

HARQ-ACK feedback from UEs corresponding to a downlink multicast transmission is essential for multicast services in order to satisfy a QoS requirement(s), e.g., reliability.

As mentioned above, a UE may support multiple multicast services, and may be configured with multiple G-RNTIs each associated with a corresponding multicast service. In some examples, when a dynamic HARQ-ACK codebook (e.g., Type-2 HARQ-ACK codebook as specified in 3GPP specifications) is configured for the multicast services, the DAIs may be separately counted per multicast service (or per G-RNTI). For each multicast service, a corresponding HARQ-ACK sub-codebook may be generated. Then, the Type-2 codebook may be constructed by concatenating the HARQ-ACK sub-codebooks for each multicast service according to an ascending ordering of the G-RNTI values of the multicast services.

For example, assuming that a UE supports two MBS services, when HARQ-ACK feedback for the two MBS services is to be transmitted in one slot and the two MBS services are of the same priority, the UE may multiplex the HARQ-ACK information bits for the two MBS services into one codebook and then transmit them in a PUCCH. For instance, separate sub-codebooks may be generated for different MBS services, where each sub-codebook may include HARQ-ACK information bits only for the corresponding MBS service arranged according to an order of DAIs associated with the corresponding MBS service. The two sub-codebooks for the two MBS services may be concatenated in the ascending order of the corresponding G-RNTI values. The concatenated sub-codebooks may be regarded as the final HARQ-ACK codebook and transmitted in the PUCCH in the indicated slot.

In some embodiments, a UE may not support simultaneous PUCCH and PUSCH transmissions in a PUCCH cell group. When a PUCCH and a PUSCH are to be transmitted in the same slot, the UE may multiplex the uplink control information (UCI), including for example, HARQ-ACK feedback, on the PUSCH and drop the PUCCH. To avoid any misunderstanding between the UE and a BS on the number of HARQ-ACK information bits, when HARQ-ACK feedback multiplexes on a PUSCH, the DCI format for scheduling the PUSCH may include a field of a UL DAI to help the UE to determine the number of HARQ-ACK information bits. For example, the value of the UL DAI may indicate the number of {serving cell, PDCCH monitoring occasion}-pair(s) in which a PDSCH transmission(s) associated with a PDCCH or PDCCH indicating semi-persistent scheduling (SPS) PDSCH release or PDCCH indicating SCell dormancy is present. In some examples, when the a code block group (CBG)-based transmission is configured for PDSCH transmission, the DCI format for scheduling the PUSCH may include two fields of UL DAIs, one for a transport block (TB)-based HARQ-ACK sub-codebook and another for a CBG-based HARQ-ACK sub-codebook.

In some embodiments, when HARQ-ACK feedback for unicast PDSCHs and HARQ-ACK feedback for multicast PDSCHs carrying one or more multicast services overlap a PUSCH, the UE may multiplex the HARQ-ACK feedback for unicast and the one or more multicasts on the PUSCH and drop the PUCCH.

When HARQ-ACK feedback is to be multiplexed on a PUSCH, the DCI scheduling the PUSCH may include a UL DAI field for determining the number of HARQ-ACK information bits as well as the number of resource elements (REs) required for multiplexing the HARQ-ACK feedback. Since separate DAIs are used for unicast and multicast and for different multicast services, multiple HARQ-ACK sub-codebooks may be generated for the unicast and multicast services with HARQ-ACK feedback to be multiplexed on the PUSCH. For example, a first sub-codebook including HARQ-ACK information bits for a unicast PDSCH(s), a second sub-codebook including HARQ-ACK information bits for PDSCHs carrying multicast #1, and a third sub-codebook including HARQ-ACK information bits for PDSCHs carrying multicast #2, ..., and the last sub-codebook including HARQ-ACK information bits for PDSCHs carrying multicast #n with the largest G-RNTI value of the supported multiple multicast services may be generated, wherein the sub-codebooks for the multicast services may be ordered in an ascending order of the respective G-RNTI values.

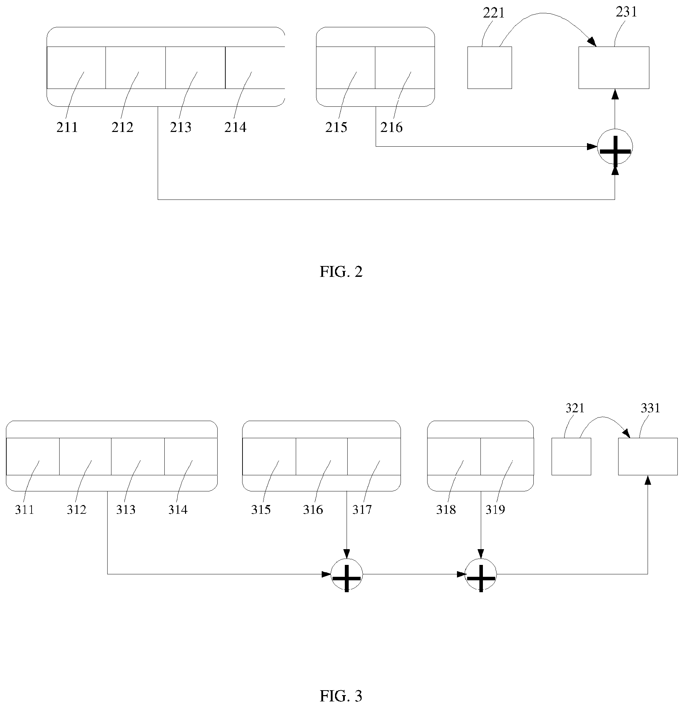

For example, referring to FIG. 2, it is assumed that two multicast services, for example, multicast service #1A and multicast service #2A, are supported by a UE. A BS may transmit, to a UE, four DCI formats 211-214 with DL DAIs equal to 1, 2, 3, and 4, respectively, to schedule four PDSCHs (e.g., PDSCHs #1-#4) associated with multicast service #1A, and two DCI formats 215 and 216 with DL DAIs equal to 1 and 2, respectively, to schedule two PDSCHs (e.g., PDSCHs #5 and #6) associated with multicast service #2A.

Assuming that HARQ-ACK feedback for PDSCHs #1-#6 is indicated to be transmitted in the same slot, the UE may generate HARQ-ACK sub-codebook #1A for multicast service #1A and HARQ-ACK sub-codebook #2A for multicast service #2A. HARQ-ACK sub-codebook #1A may include HARQ-ACK information bits for PDSCHs #1-#4, and HARQ-ACK sub-codebook #2A may include HARQ-ACK information bits for PDSCHs #5 and #6. Assuming that the G-RNTI value of multicast service #1A is smaller than that of multicast service #2A, HARQ-ACK sub-codebook #1A may be placed in front of HARQ-ACK sub-codebook #2A in the final HARQ-ACK codebook.

Assuming that the UE further receives DCI format 221 for scheduling PUSCH 231 in the same slot as the HARQ-ACK feedback, the UE may multiplex the HARQ-ACK codebook on PUSCH 231. However, since the UL DAI field in the DCI format 221 cannot indicate the number of HARQ-ACK information bits for the two separate sub-codebooks (e.g., HARQ-ACK sub-codebooks #1A and #2A) for the multicast services (i.e., only one UL DAI field for all multicast services, which is hereinafter referred to as "multicast UL DAI"), the UE may generate and transmit a wrong HARQ-ACK codebook when, for example, either the last DCI (e.g., DCI format 214) scheduling PDSCH for multicast service #1A or the last DCI (e.g., DCI format 216) scheduling PDSCH for multicast service #2A is missed by the UE, and determine a wrong number of REs on the PUSCH. Such misunderstanding between the UE and a BS would cause the unnecessary retransmission of PDSCHs by the BS, and thus degrade DL performance.

When the HARQ-ACK feedback for PDSCHs carrying a unicast service is to be transmitted in the same slot with the HARQ-ACK feedback for PDSCHs carrying one or more multicast services and a PUSCH, a similar error case may happen.

For example, referring to FIG. 3, a BS may transmit, to a UE, four DCI formats 311-314 with DL DAIs equal to 1, 2, 3, and 4, respectively, to schedule four PDSCHs (e.g., PDSCHs #1'-#4') associated with a unicast service, three DCI formats 315-317 with DL DAIs equal to 1, 2, and 3, respectively, to schedule three PDSCHs (e.g., PDSCHs #5'-#7') associated with multicast service #1A', and two DCI formats 318 and 319 with DL DAIs equal to 1 and 2, respectively, to schedule two PDSCHs (e.g., PDSCHs #8' and #9') associated with multicast service #2A'.

Assuming that HARQ-ACK feedback for the nine PDSCHs is indicated to be transmitted in the same slot, the UE may multiplex the HARQ-ACK feedback for the nine PDSCHs in the same HARQ-ACK codebook. For example, the UE may generate a unicast HARQ-ACK sub-codebook, HARQ-ACK sub-codebook #1A' for multicast service #1A' and HARQ-ACK sub-codebook #2A' for multicast service #2A'. Unicast HARQ-ACK sub-codebook may include HARQ-ACK information bits for PDSCHs #1'-#4', HARQ-ACK sub-codebook #1A' may include HARQ-ACK information bits for PDSCHs #5'-#7', and HARQ-ACK sub-codebook #2A' may include HARQ-ACK information bits for PDSCHs #8' and #9'.

A unicast HARQ-ACK sub-codebook may precede all of the sub-codebooks for the multicast services in the final HARQ-ACK codebook. Assuming that the G-RNTI value of multicast service #1A' is smaller than that of multicast service #2A', the unicast HARQ-ACK sub-codebook may be placed at the beginning of the HARQ-ACK codebook, and then followed by HARQ-ACK sub-codebook #1A' and HARQ-ACK sub-codebook #2A' sequentially.

Assuming that the UE further receives DCI format 321 for scheduling PUSCH 331 in the same slot as the HARQ-ACK feedback, the UE may multiplex the HARQ-ACK codebook on PUSCH 331. DCI format 321 may include a UL DAI field for the unicast service (hereinafter referred to as "unicast UL DAI"), such that the UE and BS may have the same understanding on the size of the unicast HARQ-ACK sub-codebook. However, since the single multicast UL DAI field in DCI format 321 cannot indicate the number of HARQ-ACK information bits for the separate sub-codebooks of the multicast services (e.g., HARQ-ACK sub-codebooks #1A' and #2A'), the UE may generate and transmit a wrong HARQ-ACK codebook when, for example, either the last DCI (e.g., DCI format 317) scheduling the PDSCH for multicast service #1A' or the last DCI (e.g., DCI format 319) scheduling the PDSCH for multicast service #2A' is missed by the UE, and determine a wrong number of REs on the PUSCH. Such misunderstanding between the UE and a BS would cause the unnecessary retransmission of PDSCHs by the BS, and thus degrade DL performance.

Embodiments of the present disclosure provide solutions for multiplexing HARQ-ACK feedback on a PUSCH. For example, solutions for indicating the HARQ-ACK sub-codebook size for at least one multicast service are proposed. For example, solutions for determining a HARQ-ACK codebook when HARQ-ACK feedback for at least one multicast service is to be multiplexed on a PUSCH are proposed. These solutions can solve the HARQ-ACK codebook misunderstanding between a UE and a BS. More details on the embodiments of the present disclosure will be illustrated in the following text in combination with the appended drawings.

In the following text, embodiments are described with respect to multiplexing HARQ-ACK feedback for at least one multicast service on a slot, wherein the at least one multicast service is configured with a Type-2 HARQ-ACK codebook. It should be understood that the unicast service may be configured with a Type-1 HARQ-ACK codebook (as specified in 3GPP specifications) or Type-2 HARQ-ACK codebook. HARQ-ACK feedback for the unicast service may be multiplex with the HARQ-ACK feedback for the at least one multicast service in the same slot.

In some embodiments of the present disclosure, the single multicast UL DAI may indicate a sum of DL DAIs of all supported multicast services (e.g., all configured G-RNTIs). However, a misunderstanding between a UE and a BS on the HARQ-ACK information bits for multiple multicast services may still occur when a DCI format(s) for the multicast services is missed by the UE.

In some embodiments of the present disclosure, each DL DAI of the multiple multicast services (e.g., configured G-RNTIs) may have the same value. For example, the same number of multicast PDSCHs may be scheduled for each multicast service. However, this would impose too many restrictions on the scheduling algorithm of a BS.

In some embodiments of the present disclosure, the single multicast UL DAI may indicate the largest DL DAI value among the supported multicast services (e.g., all configured G-RNTIs). This solution can solve a HARQ-ACK codebook misunderstanding between a UE and a BS. However, the drawback is that too much HARQ-ACK feedback overhead may be caused when, for example, a large value of the multicast UL DAI is indicated while a few multicast PDSCHs are received for a specific multicast service(s) and the UE has to append many NACK bits in the HARQ-ACK sub-codebook for the specific multicast service(s) to align the indicated value.

Embodiments of the present disclosure further provide enhanced solutions for multiplexing HARQ-ACK feedback on a PUSCH.

In some embodiments of the present disclosure, for a multicast DCI format (e.g., DCI format 4_1 or 4_2) scheduling a PDSCH or indicating an SPS PDSCH release, if the corresponding HARQ-ACK feedback is disabled, the counter DAI in such DCI format may be reserved or neglected by the UE, or indicate the same value as the counter DAI in the previous DCI format (which is associated with the same multicast service) with HARQ-ACK feedback enabled. For a DCI format scheduling a PUSCH (e.g., DCI format 0_0, 0_1 or 0_2), the multicast UL DAI in the DCI format may only count those multicast DCI formats with HARQ-ACK feedback enabled.

In some embodiments of the present disclosure, when HARQ-ACK feedback for at least one multicast service is to be multiplexed on a PUSCH, with or without HARQ-ACK feedback for a unicast service, the UL grant scheduling the PUSCH (e.g., DCI format 0_0, 0_1 or 0_2) may include an indicator associated with the HARQ-ACK feedback for the at least one multicast service to be multiplexed on the PUSCH. In some examples, the indicator may reuse the single multicast UL DAI field in the DCI format scheduling the PUSCH. In some examples, the indicator may be indicated by a different field from the multicast UL DAI field. As will be described in the following context, based on the indicator, the UE may generate a corresponding multicast HARQ-ACK sub-codebook for each of the at least one multicast service, and transmit a HARQ-ACK codebook including the multicast HARQ-ACK sub-codebook(s) for the at least one multicast service on the PUSCH. For clarity, the indicator may be hereinafter referred to as "multicast sub-codebook related indicator."

In some embodiments of the present disclosure, the multicast sub-codebook related indicator may indicate a multicast HARQ-ACK sub-codebook size for each of the at least one multicast service (e.g., the configured G-RNTI(s)). For example, each multicast HARQ-ACK sub-codebook has the same size as the indicated multicast HARQ-ACK sub-codebook size.

In some embodiments of the present disclosure, the multicast sub-codebook related indicator may indicate the multicast HARQ-ACK sub-codebook size from a set of possible multicast HARQ-ACK sub-codebook sizes. In some examples, the set of possible multicast HARQ-ACK sub-codebook sizes may be configured via RRC signaling by a BS. In some examples, the set of possible multicast HARQ-ACK sub-codebook sizes may be predefined.

In some examples, the multicast sub-codebook related indicator may include two bits, and then the set of possible multicast HARQ-ACK sub-codebook sizes can include up to 4 (i.e., 2²) multicast HARQ-ACK sub-codebook sizes. In some examples, when the UE is configured with a maximum of 1 code word per PDSCH or configured with a maximum of 2 code words per PDSCH and spatial bundling, the set of possible multicast HARQ-ACK sub-codebook sizes can include, for example, {0, 2, 4, 6}. In some examples, when the UE is configured with a maximum of 2 code words per PDSCH and no spatial bundling, the set of possible multicast HARQ-ACK sub-codebook sizes can include, for example, {0, 4, 8, 12}. The possible multicast HARQ-ACK sub-codebook size "0" may indicate that no multicast HARQ-ACK feedback needs to be multiplexed on the PUSCH. For example, the UE may not multiplex the HARQ-ACK feedback for the at least one multicast service on the PUSCH when the multicast sub-codebook related indicator indicates a sub-codebook size of "0".

From the perspective of a BS, the BS can determine a corresponding multicast HARQ-ACK sub-codebook size for each of the at least one multicast services (e.g., the G-RNTI(s) configured for the UE) based on, for example, the corresponding PDSCHs transmitted by the BS or the corresponding DL DAIs in the DCI formats scheduling the PDSCHs. The BS may use the multicast sub-codebook related indicator in the DCI format for scheduling the PUSCH to indicate one of: (i) a largest value among the determined multicast HARQ-ACK sub-codebook size(s) associated with the at least one multicast service (e.g., all the configured G-RNTIs); (ii) a smallest value in the set of possible multicast HARQ-ACK sub-codebook sizes which is larger than or equal to the largest value among the determined multicast HARQ-ACK sub-codebook size(s) associated with the at least one multicast service (e.g., all the configured G-RNTIs); and (iii) a scaled value based on the determined multicast HARQ-ACK sub-codebook size(s) associated with the at least one multicast service (e.g., all the configured G-RNTIs).

Regarding case (ii), the BS may first determine the largest multicast HARQ-ACK sub-codebook size among the multicast HARQ-ACK sub-codebook size(s) associated with the at least one multicast service (e.g., all the configured G-RNTIs. In the case that the set of possible HARQ-ACK sub-codebook sizes does not include a value which is equal to the largest multicast HARQ-ACK sub-codebook size, the BS may set the multicast sub-codebook related indicator to indicate the smallest value in the set of possible multicast HARQ-ACK sub-codebook sizes which is larger than the largest multicast HARQ-ACK sub-codebook size. For example, it is assumed that the set of possible HARQ-ACK sub-codebook sizes is configured or predefined as {0, 2, 4, 6}, and the largest HARQ-ACK sub-codebook size for all the configured G-RNTIs is 3. Since the size value "3" is not included in the set of possible HARQ-ACK sub-codebook sizes, the BS may indicate a multicast HARQ-ACK sub-codebook size of "4" to the UE which is the smallest size in the set {0, 2, 4, 6} larger than "3".

Regarding case (iii), various methods that can be conceived of by persons skilled in the art may be applied to determine the scaled value. For example, the scaled value may be an average value of the determined multicast HARQ-ACK sub-codebook size(s) associated with the at least one multicast service (e.g., all the configured G-RNTIs). By employing the scaled value, HARQ-ACK feedback signaling overhead multiplexing on a PUSCH can be reduced while a correct understanding between the UE and the BS on the HARQ-ACK codebook including HARQ-ACK information bits for the multicast transmissions is guaranteed.

From the perspective of a UE, the UE may generate each multicast HARQ-ACK sub-codebook based on the size indicated by the multicast sub-codebook related indicator. For example, the UE may receive a set of PDSCHs associated with a multicast service of the at least one multicast service and may generate a multicast HARQ-ACK sub-codebook comprising HARQ-ACK information bits for the set of PDSCHs. In cases (i) and (ii), the UE does not expect that the size of the generated HARQ-ACK sub-codebook is larger than the indicated size.

In response to the size of the multicast HARQ-ACK sub-codebook being smaller than the size indicated by the multicast sub-codebook related indicator, the UE may add a padding bit(s) (e.g., appending a NACK bit) to the multicast HARQ-ACK sub-codebook to align (e.g., equal to) the size of the multicast HARQ-ACK sub-codebook with the indicated size.

In response to the size of the multicast HARQ-ACK sub-codebook being larger than the indicated size, the UE may perform HARQ-ACK bundling among the HARQ-ACK information bits for the set of PDSCHs to align (e.g., equal to) the size of the multicast HARQ-ACK sub-codebook with the indicated size.

Various methods for HARQ-ACK bundling which can be conceived of by persons skilled in the art can be applied here. For example, it is assumed that the HARQ-ACK information bits for the set of PDSCHs include x bits, the multicast sub-codebook related indicator indicates k bits, and x > k. In some cases, the HARQ-ACK bundling operation may include: performing a logic AND operation among the last (x-k+1) HARQ-ACK information bits to generate one bundled bit and keeping the first k-1 bits unbundled. In some cases, the HARQ-ACK bundling operation may include: performing a logic AND operation among the first (x-k+1) HARQ-ACK information bits to generate one bundled bit and keeping the last k-1 bits unbundled. In some cases, the HARQ-ACK bundling operation may include: dividing the x HARQ-ACK information bits into k groups, and then performing a logic AND operation among the HARQ-ACK information bits in each group to generate one bundled bit, wherein each group comprises $\left⌊x/k\right⌋$ or $\left⌈x/k\right⌉$ HARQ-ACK information bits.

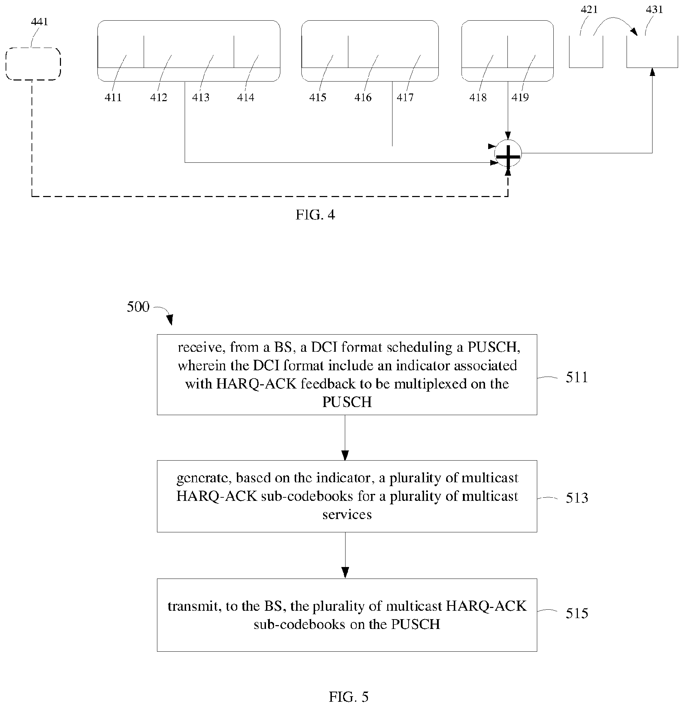

For example, referring to FIG. 4, a UE may be configured with 3 G-RNTIs (e.g., G-RNTIs #1-#3) for three multicast services. A BS may transmit, to the UE, four DCI formats 411-414 with DL DAIs equal to 1, 2, 3, and 4, respectively, to schedule four PDSCHs (e.g., PDSCHs #1B-#4B) associated with multicast service #1B associated with G-RNTI #1, three DCI formats 415-417 with DL DAIs equal to 1, 2, and 3, respectively, to schedule three PDSCHs (e.g., PDSCHs #5B-#7B) associated with multicast service #2B associated with G-RNTI #2, and two DCI formats 418 and 419 with DL DAIs equal to 1 and 2, respectively, to schedule two PDSCHs (e.g., PDSCHs #8B and #9B) associated with multicast service #3B associated with G-RNTI #3. The HARQ-ACK feedback for the nine PDSCHs is to be multiplexed on PUSCH 431 scheduled by DCI format 421.

In some embodiments, DCI format 421 may include a multicast sub-codebook related indicator as described above to facilitate the same understanding on the multicast HARQ-ACK sub-codebook size between the UE and BS. It is further assumed that each multicast PDSCH (e.g., PDSCHs #1B and #9B) corresponds to a single HARQ-ACK information bit. Therefore, the BS may determine that the HARQ-ACK sub-codebook sizes for multicast services #1B-#3B are 4 bits, 3 bits, and 2 bits. That is, the largest HARQ-ACK sub-codebook size is 4.

In some embodiments, the multicast sub-codebook related indicator may indicate the largest HARQ-ACK sub-codebook size. For example, it is assumed that the UE is configured with a set of possible HARQ-ACK sub-codebook sizes {0, 2, 4, 6}. The BS may set the multicast sub-codebook related indicator to indicate a multicast HARQ-ACK sub-codebook size of 4.

In response to receiving DCI format 421, the UE may determine that the multicast HARQ-ACK sub-codebook size of 4 is applied to all the multicast services (e.g., all the configured G-RNTIs).

For example, for multicast service #1B associated with G-RNTI #1, when no DCI format for multicast service #1B is missed by the UE, the UE may generate HARQ-ACK sub-codebook #1B including four HARQ-ACK information bits corresponding to PDSCHs #1B-#4B. In this scenario, the UE does not need to perform HARQ-ACK bundling or bit padding. Otherwise, when the size of the generated HARQ-ACK sub-codebook does not align with the indicated multicast HARQ-ACK sub-codebook size, the UE may perform HARQ-ACK bundling or bit padding. When the last one or more DCI formats for multicast service #1B (e.g., DCI format 414) are missed by the UE, this error case can be remedied by the indicated multicast HARQ-ACK sub-codebook size. For example, the UE may perform bit padding until the number of HARQ-ACK information bits of HARQ-ACK sub-codebook #1B after padding is equal to 4.

For multicast service #2B associated with G-RNTI #2, when no DCI format for multicast service #2B is missed by the UE, the UE may generate HARQ-ACK sub-codebook #2B including three HARQ-ACK information bits corresponding to PDSCHs #5B-#7B. When the last one or more DCI formats (e.g., DCI format 417) for multicast service #2B are missed by the UE, this error case can be remedied by the indicated multicast HARQ-ACK sub-codebook size. Since the number of HARQ-ACK information bits (3 bits or less) is smaller than the indicated multicast HARQ-ACK sub-codebook size of 4, a NACK bit(s) may be appended to align the size of HARQ-ACK sub-codebook #2B to 4.

For multicast service #3B associated with G-RNTI #3, when no DCI format for multicast service #3B is missed by the UE, the UE may generate HARQ-ACK sub-codebook #3B including two HARQ-ACK information bits corresponding to PDSCHs #8B and #9B. When the last one or more DCI formats (e.g., DCI format 419) for multicast service #3B are missed by the UE, this error case can be remedied by the indicated multicast HARQ-ACK sub-codebook size. Since the number of HARQ-ACK information bits (2 bits or less) is smaller than the indicated multicast HARQ-ACK sub-codebook size of 4, NACK bits may be appended to align the size of HARQ-ACK sub-codebook #3B to 4.

In some embodiments, the multicast sub-codebook related indicator may indicate the smallest value in the set of possible HARQ-ACK sub-codebook sizes which is larger than or equal to the largest HARQ-ACK sub-codebook size. For example, it is assumed that the UE is configured with a set of possible HARQ-ACK sub-codebook sizes {0, 3, 6, 9}. Since the smallest size in the set of possible HARQ-ACK sub-codebook sizes which is larger than or equal to the largest HARQ-ACK sub-codebook size "4" is 6, the multicast sub-codebook related indicator may indicate a multicast HARQ-ACK sub-codebook size of 6.

In response to receiving DCI format 421, the UE may determine that the multicast HARQ-ACK sub-codebook size of 6 is applied to all the multicast services (e.g., all the configured G-RNTIs).

For example, when no DCI format for multicast service #1B is missed by the UE, the UE may generate HARQ-ACK sub-codebook #1B including four HARQ-ACK information bits corresponding to PDSCHs #1B-#4B. When the last one or more DCI formats (e.g., DCI format 414) for multicast service #1B are missed by the UE, this error case can be remedied. Since the number of HARQ-ACK information bits (4 bits or less) of HARQ-ACK sub-codebook #1B is smaller than the indicated multicast HARQ-ACK sub-codebook size of 6, NACK bits may be appended to align the size of HARQ-ACK sub-codebook #1B to 6. Similarly, bit padding may be performed on HARQ-ACK sub-codebooks #2B and #3B until their size after padding is equal to 6.

In some embodiments, the multicast sub-codebook related indicator may indicate an average value of the multicast HARQ-ACK sub-codebook sizes. For example, it is assumed that the UE is configured with a set of possible HARQ-ACK sub-codebook sizes {0, 2, 3, 4}. As stated above, the BS may determine that the HARQ-ACK sub-codebook sizes for multicast services #1B-#3B are 4 bits, 3 bits, and 2 bits, and thus the average value of the HARQ-ACK sub-codebook sizes is 3 bits (i.e., (4+3+2) / 3 = 3). The multicast sub-codebook related indicator may indicate a multicast HARQ-ACK sub-codebook size of 3. In some examples, in the cases that the average value "3" is not included in the set of possible HARQ-ACK sub-codebook sizes, the multicast sub-codebook related indicator may indicate the smallest value in the set which is larger than the average value or the largest value in the set which is smaller than the average value.

In response to receiving DCI format 421, the UE may determine that the multicast HARQ-ACK sub-codebook size of 3 is applied to all the multicast services (e.g., all the configured G-RNTIs). For example, when no DCI format for multicast service #1B is missed by the UE, HARQ-ACK sub-codebook #1B may include four HARQ-ACK information bits corresponding to PDSCHs #1B-#4B. The UE may perform HARQ-ACK bundling among the four HARQ-ACK information bits so as to align with the multicast HARQ-ACK sub-codebook size of 3. In one example, the UE may bundle the first two bits of the four HARQ-ACK information bits into one bit (e.g., by a logic AND operation). In another example, the UE may bundle the last two bits of the four HARQ-ACK information bits into one bit (e.g., by a logic AND operation). When the last DCI format for multicast service #1B (e.g., DCI format 414) is missed by the UE, the UE does not need to perform HARQ-ACK bundling or bit padding. When the last two or more DCI formats for multicast service #1B (e.g., DCI formats 413 and 414) are missed by the UE, the UE may perform bit padding to align the size of the HARQ-ACK sub-codebook #1B with the multicast HARQ-ACK sub-codebook size of 3.

When no DCI format for multicast service #2B is missed by the UE, HARQ-ACK sub-codebook #2B may include three HARQ-ACK information bits corresponding to PDSCHs #5B-#7B. In this scenario, the UE does not need to perform HARQ-ACK bundling or bit padding. When the last one or more DCI formats for multicast service #2B (e.g., DCI format 417) are missed by the UE, this error case can be remedied. For example, the UE may perform bit padding until the number of HARQ-ACK information bits of HARQ-ACK sub-codebook #2B after padding is equal to 3.

When no DCI format for multicast service #3B is missed by the UE, HARQ-ACK sub-codebook #3B may include two HARQ-ACK information bits corresponding to PDSCHs #8B and #9B. When the last one or more DCI formats (e.g., DCI format 419) for multicast service #3B are missed by the UE, this error case can be remedied. Since the number of HARQ-ACK information bits (2 bits or less) is smaller than the indicated multicast HARQ-ACK sub-codebook size of 3, a NACK bit(s) may be appended to align the size of HARQ-ACK sub-codebook #3B to 3.

The UE may concatenate HARQ-ACK sub-codebooks #1B-#3B according to an ascending ordering of the G-RNTI values of the corresponding multicast services. For example, assuming that G-RNTI #1 < G-RNTI #2 < G-RNTI #3, the final HARQ-ACK codebook may first include HARQ-ACK sub-codebook #1B, followed by HARQ-ACK sub-codebook #2B and HARQ-ACK sub-codebook #3B sequentially.

In some examples, HARQ-ACK feedback for a unicast service may also be multiplexed with the HARQ-ACK feedback for multicast services #1B-#3B on PUSCH 431. The UE may generate a unicast HARQ-ACK sub-codebook 441, which may include HARQ-ACK information bits for unicast PDSCHs. Unicast HARQ-ACK sub-codebook 441 may precede all of the sub-codebooks (HARQ-ACK sub-codebooks #1B-#3B) for the multicast services in the final HARQ-ACK codebook.

From the perspective of a BS, the BS knows the latest DL DAI for each of the at least one multicast services (e.g., the G-RNTI(s) configured for the UE). In some embodiments of the present disclosure, the multicast sub-codebook related indicator in the DCI format for scheduling the PUSCH may indicate one of: (a) a maximum value of the latest transmitted downlink (DL) downlink assignment indexes (DAIs) for the at least one multicast service (e.g., all the configured G-RNTIs); (b) a minimum value of the latest transmitted DL DAIs for the at least one multicast service (e.g., all the configured G-RNTIs); or (c) a scaled value based on the latest transmitted DL DAIs for the at least one multicast service (e.g., all the configured G-RNTIs).

In this sense, the multicast sub-codebook related indicator indicates the maximum number of {serving cell, PDCCH monitoring occasion}-pair(s) in which a PDSCH transmission(s) associated with a multicast PDCCH or multicast PDCCH indicating an SPS PDSCH release is present for a specific multicast service of the at least one multicast services. In the case that a multicast transmission is only supported in a single serving cell, the above definition can be rephrased as that the multicast sub-codebook related indicator indicates the maximum number of multicast PDCCH monitoring occasions in which a PDSCH transmission(s) associated with a multicast PDCCH or multicast PDCCH indicating an SPS PDSCH release is present on a serving cell for a specific multicast service.

Regarding case (c), various methods that can be conceived of by persons skilled in the art may be applied to determine the scaled value. For example, the scaled value may be an average value of the latest transmitted DL DAIs for the at least one multicast service (e.g., all the configured G-RNTIs). By employing the scaled value, HARQ-ACK feedback signaling overhead multiplexing on a PUSCH can be reduced while a correct understanding between the UE and the BS on the HARQ-ACK codebook including HARQ-ACK information bits for the multicast transmissions is guaranteed.

From the perspective of a UE, the UE may determine a multicast HARQ-ACK sub-codebook size for each of the at least one multicast service based on the multicast sub-codebook related indicator. Each multicast HARQ-ACK sub-codebook may have the same size. For example, when the UE is configured with a maximum of 1 code word per PDSCH or configured with a maximum of 2 code words per PDSCH and spatial bundling, the multicast HARQ-ACK sub-codebook size may be equal to the value of the multicast sub-codebook related indicator. When the UE is configured with a maximum of 2 code words per PDSCH and no spatial bundling, the multicast HARQ-ACK sub-codebook size may double the value of the multicast sub-codebook related indicator.

In some embodiments, when the value of the multicast sub-codebook related indicator is 4 and the UE has not received any PDCCH with DCI format 4_1 or with DCI format 4_2 for scheduling PDSCH receptions or SPS PDSCH release on any serving cell and the UE does not have HARQ-ACK information in response to an SPS PDSCH reception activated by DCI format 4_1 or with DCI format 4_2 to be multiplexed in the PUSCH, the UE does not multiplex HARQ-ACK information on the PUSCH.

For example, the UE may receive a set of PDSCHs associated with a multicast service of the at least one multicast service and may generate a multicast HARQ-ACK sub-codebook comprising HARQ-ACK information bits for the set of PDSCHs. In response to the size of the multicast HARQ-ACK sub-codebook being smaller than the determined multicast HARQ-ACK sub-codebook size (i.e., based on the multicast sub-codebook related indicator), the UE may add a padding bit(s) (e.g., appending a NACK bit) to the multicast HARQ-ACK sub-codebook to align (e.g., equal to) the size of the multicast HARQ-ACK sub-codebook with the determined size.

In response to the size of the multicast HARQ-ACK sub-codebook being larger than the determined multicast HARQ-ACK sub-codebook size, the UE may perform HARQ-ACK bundling among the HARQ-ACK information bits for the set of PDSCHs to align (e.g., equal to) the size of the multicast HARQ-ACK sub-codebook with the determined size. Various methods for HARQ-ACK bundling which can be conceived of by persons skilled in the art can be applied here.

For example, referring again to FIG. 4, from the perspective of the BS, the BS may determine that the values of latest transmitted DL DAIs for multicast services #1B-#3B are 4, 3, and 2. It is assumed that each multicast PDSCH (e.g., PDSCHs #1B and #9B) corresponds to a single HARQ-ACK information bit.

In some embodiments, the multicast sub-codebook related indicator in DCI format 421 may indicate the maximum value (e.g., 4) of the latest transmitted DL DAIs for multicast services #1B-#3B.

In response to receiving DCI format 421, the UE may determine that the multicast HARQ-ACK sub-codebook size of 4 is applied to all the multicast services (e.g., all the configured G-RNTIs).

For example, for multicast service #1B associated with G-RNTI #1, when no DCI format for multicast service #1B is missed by the UE, HARQ-ACK sub-codebook #1B may include four HARQ-ACK information bits corresponding to PDSCHs #1B-#4B. In this scenario, the UE does not need to perform HARQ-ACK bundling or bit padding. When the last one or more DCI formats for multicast service #1B (e.g., DCI format 414) are missed by the UE, this error case can be remedied. For example, the UE may perform bit padding until the number of HARQ-ACK information bits of HARQ-ACK sub-codebook #1B after padding is equal to 4.

For multicast service #2B associated with G-RNTI #2, when no DCI format for multicast service #2B is missed by the UE, HARQ-ACK sub-codebook #2B may include three HARQ-ACK information bits corresponding to PDSCHs #5B-#7B. When the last one or more DCI formats (e.g., DCI format 417) for multicast service #2B are missed by the UE, this error case can be remedied. Since the number of HARQ-ACK information bits (3 bits or less) is smaller than the indicated multicast HARQ-ACK sub-codebook size of 4, a NACK bit(s) may be appended to align the size of HARQ-ACK sub-codebook #2B to 4.

For multicast service #3B associated with G-RNTI #3, when no DCI format for multicast service #3B is missed by the UE, HARQ-ACK sub-codebook #3B may include two HARQ-ACK information bits corresponding to PDSCHs #8B and #9B. When the last one or more DCI formats (e.g., DCI format 419) for multicast service #3B are missed by the UE, this error case can be remedied. Since the number of HARQ-ACK information bits (2 bits or less) is smaller than the indicated multicast HARQ-ACK sub-codebook size of 4, NACK bits may be appended to align the size of HARQ-ACK sub-codebook #3B to 4.

In some embodiments, the multicast sub-codebook related indicator may indicate the minimum value (e.g., 2) of the latest transmitted DL DAIs for multicast services #1B-#3B.

In response to receiving DCI format 421, the UE may determine that the multicast HARQ-ACK sub-codebook size of 2 is applied to all the multicast services (e.g., all the configured G-RNTIs).

For example, when no DCI format for multicast service #1B is missed by the UE, HARQ-ACK sub-codebook #1B may include four HARQ-ACK information bits corresponding to PDSCHs #1B-#4B. The UE may perform HARQ-ACK bundling among the four HARQ-ACK information bits so as to align the multicast HARQ-ACK sub-codebook size of 2. In one example, the UE may bundle the first or last three bits of the four HARQ-ACK information bits into one bit (e.g., by a logic AND operation). In another example, the UE may divide the four HARQ-ACK information bits into two groups, and then perform a logic AND operation among the HARQ-ACK information bits in each group to generate one bundled bit, wherein each group comprises two HARQ-ACK information bits. When the last DCI format for multicast service #1B (e.g., DCI format 414) is missed by the UE, HARQ-ACK sub-codebook #1B may include three HARQ-ACK information bits corresponding to PDSCHs #1B-#3B. The UE may perform HARQ-ACK bundling among the three HARQ-ACK information bits so as to align the multicast HARQ-ACK sub-codebook size of 2.

For example, when no DCI format for multicast service #2B is missed by the UE, HARQ-ACK sub-codebook #2B may include three HARQ-ACK information bits corresponding to PDSCHs #5B-#7B. The UE may perform HARQ-ACK bundling among the three HARQ-ACK information bits so as to align the multicast HARQ-ACK sub-codebook size of 2.

For example, when no DCI format for multicast service #3B is missed by the UE, HARQ-ACK sub-codebook #3B may include two HARQ-ACK information bits corresponding to PDSCHs #8B and #9B. In this scenario, the UE does not need to perform HARQ-ACK bundling or bit padding. When the last DCI format (e.g., DCI format 419) for multicast service #3B is missed by the UE, this error case can be remedied. The UE may perform bit padding to align the size of the HARQ-ACK sub-codebook #3B with the multicast HARQ-ACK sub-codebook size of 2.

In some embodiments, the multicast sub-codebook related indicator may indicate an average value (e.g., (4+3+2) / 3 = 3) of the latest transmitted DL DAIs for multicast services #1B-#3B.

In response to receiving DCI format 421, the UE may determine that the multicast HARQ-ACK sub-codebook size of 3 is applied to all the multicast services (e.g., all the configured G-RNTIs).

For example, when no DCI format for multicast service #1B is missed by the UE, HARQ-ACK sub-codebook #1B may include four HARQ-ACK information bits corresponding to PDSCHs #1B-#4B. The UE may perform HARQ-ACK bundling among the four HARQ-ACK information bits so as to align the multicast HARQ-ACK sub-codebook size of 3. In one example, the UE may bundle the first two bits of the four HARQ-ACK information bits into one bit (e.g., by a logic AND operation). In another example, the UE may bundle the last two bits of the four HARQ-ACK information bits into one bit (e.g., by a logic AND operation). In another example, the UE may divide the four HARQ-ACK information bits into three groups, and then perform a logic AND operation among the HARQ-ACK information bits in each group to generate one bundled bit, wherein each group comprises one or two HARQ-ACK information bits. When the last DCI format for multicast service #1B (e.g., DCI format 414) is missed by the UE, the UE does not need to perform HARQ-ACK bundling or bit padding. When the last two or more DCI formats for multicast service #1B (e.g., DCI formats 413 and 414) are missed by the UE, the UE may perform bit padding to align the size of the HARQ-ACK sub-codebook #1B with the multicast HARQ-ACK sub-codebook size of 3.

When no DCI format for multicast service #2B is missed by the UE, HARQ-ACK sub-codebook #2B may include three HARQ-ACK information bits corresponding to PDSCHs #5B-#7B. In this scenario, the UE does not need to perform HARQ-ACK bundling or bit padding. When the last one or more DCI formats for multicast service #2B (e.g., DCI format 417) are missed by the UE, the UE may perform bit padding until the number of HARQ-ACK information bits of HARQ-ACK sub-codebook #2B after padding is equal to 3.

When no DCI format for multicast service #3B is missed by the UE, HARQ-ACK sub-codebook #3B may include two HARQ-ACK information bits corresponding to PDSCHs #8B and #9B. When the last one or more DCI formats (e.g., DCI format 419) for multicast service #3B are missed by the UE, this error case can be remedied. Since the number of HARQ-ACK information bits (2 bits or less) is smaller than the indicated multicast HARQ-ACK sub-codebook size of 3, a NACK bit(s) may be appended to align the size of HARQ-ACK sub-codebook #3B to 3.

In some embodiments of the present disclosure, the multicast sub-codebook related indicator may be associated with a multicast service of at least one multicast service which has the lowest RNTI value among the RNTI(s) of the at least one multicast service. For example, the multicast sub-codebook related indicator may indicate the number of PDCCH monitoring occasions in which a PDSCH transmission(s) associated with a PDCCH or PDCCH indicating an SPS PDSCH release with enabled HARQ-ACK feedback is present on a serving cell, wherein the CRC of the DCI format carried by each PDCCH is scrambled by a G-RNTI having the lowest value among all the configured G-RNTIs of the UE.

In the case that the multicast HARQ-ACK sub-codebooks in a HARQ-ACK codebook are arranged according to the ascending order of the corresponding G-RNTIs, the multicast sub-codebook related indicator corresponds to the first multicast HARQ-ACK sub-codebook among all the multicast HARQ-ACK sub-codebooks.

For example, referring again to FIG. 4, it is assumed that G-RNTI #1 < G-RNTI #2 < G-RNTI #3. The multicast sub-codebook related indicator in DCI format 421 may indicate a multicast HARQ-ACK sub-codebook size for multicast service #1B associated with G-RNTI #1. For example, the multicast sub-codebook related indicator may indicate a value of 4 (e.g., "11"). When no DCI format for multicast service #1B is missed by the UE, HARQ-ACK sub-codebook #1B may include four HARQ-ACK information bits corresponding to PDSCHs #1B-#4B. In this scenario, the UE does not need to perform HARQ-ACK bundling or bit padding. When the last one or more DCI formats for multicast service #1B (e.g., DCI format 414) are missed by the UE, the UE may perform bit padding until the number of HARQ-ACK information bits of HARQ-ACK sub-codebook #1B after padding is equal to the indicate size of 4.

In some embodiments of the present disclosure, the multicast sub-codebook related indicator may indicate the total number of {serving cell, PDCCH monitoring occasion}-pair(s) in which a PDSCH transmission(s) associated with a PDCCH or PDCCH indicating an SPS PDSCH release is present among the at least one multicast service identified by associated configured G-RNTIs for the UE. In the case that a multicast transmission is only supported in a single serving cell, the above definition can be rephrased as that the multicast sub-codebook related indicator may indicate a total number of multicast PDCCH monitoring occasions in which a PDSCH transmission associated with a PDCCH or a PDCCH indicating an SPS PDSCH release for the at least one multicast service (e.g., identified by the configured G-RNTIs) is present on a serving cell of the UE.

From the perspective of a BS, the multicast sub-codebook related indicator thus indicates the total number of PDCCH monitoring occasions in which a PDSCH transmission(s) associated with a PDCCH or PDCCH indicating an SPS PDSCH release is present on a serving cell of the UE, where the CRC of the DCI format carried by each PDCCH is scrambled by one of the G-RNTIs configured for the UE.

From the perspective of the UE, in response to receiving the multicast sub-codebook related indicator, the UE may determine whether a last multicast DCI format for a multicast service is missed by the UE. For example, when the value indicated by the multicast sub-codebook related indicator is equal to the total number of received multicast DCI formats for scheduling multicast PDSCH receptions or indicating a multicast SPS release, the UE may determine that there is no missed multicast DCI. Then, the UE may multiplex each multicast HARQ-ACK sub-codebook on the scheduled PUSCH. Otherwise, when the value indicated by the multicast sub-codebook related indicator is larger than the total number of received multicast DCI formats for scheduling multicast PDSCH receptions or indicating a multicast SPS release, the UE may determine that at least one multicast DCI format is missed. In such scenario, the UE behavior is described in details in the following text. According to the following UE behavior, at most two hypotheses may be assumed by the BS for blind detection of the HARQ-ACK codebook multiplexed on the PUSCH.

In some embodiments, the UE may generate each multicast HARQ-ACK sub-codebook for the at least one multicast service according to a multicast HARQ-ACK sub-codebook size. When the number of generated HARQ-ACK information bits for a specific multicast HARQ-ACK sub-codebook prior to padding is smaller than the multicast HARQ-ACK sub-codebook size, a padding bit(s) (e.g., a NACK bit) may be added to the multicast HARQ-ACK sub-codebook to align with the multicast HARQ-ACK sub-codebook size. When the number of generated HARQ-ACK information bits for a specific multicast HARQ-ACK sub-codebook prior to bundling is larger than the multicast HARQ-ACK sub-codebook size, HARQ-ACK bundling may be performed to the generated HARQ-ACK information bits such that the size of the specific multicast HARQ-ACK sub-codebook aligns with the multicast HARQ-ACK sub-codebook size.

The multicast HARQ-ACK sub-codebook size may be configured by the BS via RRC signaling or may be predefined, for example, in a standard(s). In some examples, the multicast HARQ-ACK sub-codebook size may be configured via RRC signaling from a set of possible sizes. The set of possible sizes may be configured via RRC signaling or may be predefined. In some examples, the set of possible sizes may include {1, 2, 3, 4, 5, 6, 7, 8, etc.}.

The BS may perform blind detection to receive the at least one HARQ-ACK sub-codebook for the at least one multicast service. The blind detection may be based on (1) the indicated total number (i.e., no multicast DCI is missed by the UE) or (2) the multicast HARQ-ACK sub-codebook size and the number of the at least one multicast service (e.g., the product of the multicast HARQ-ACK sub-codebook size and the number of the at least one multicast service).

In some embodiments, the UE may generate the multicast HARQ-ACK sub-codebook(s) for the at least one multicast service according to the indicated total number. For example, the UE may generate each multicast HARQ-ACK sub-codebook according to the actually received and decoded multicast PDSCHs. The UE may concatenate all the multicast HARQ-ACK sub-codebooks into one (e.g., in an ascending order of G-RNTI values). Then, the UE may align the size of the concatenated multicast HARQ-ACK sub-codebooks with the indicated total number (e.g., by bit padding).

The UE may further generate an additional HARQ-ACK sub-codebook indicating the latest received DL DAIs for the at least one multicast service (e.g., all the configured G-RNTIs). The size of the additional sub-codebook may be dependent on the number of the at least one multicast service (e.g., the configured G-RNTIs), and thus is known to both UE and BS. For example, assuming a DL DAI includes 2 bits, the size of the additional sub-codebook may be equal to the product of 2 and the number of the at least one multicast service.

The latest received DL DAIs in the additional HARQ-ACK sub-codebook may be ordered based on a predefined order, for the ascending or descending order of the RNTI values of the corresponding multicast services. The additional HARQ-ACK sub-codebook may be placed in a predefined position of the final HARQ-ACK codebook to be transmitted on the PUSCH. For example, the additional HARQ-ACK sub-codebook may be prepended or appended to the concatenated multicast HARQ-ACK sub-codebooks (after padding if needed).

The BS may perform blind detection to receive the at least one HARQ-ACK sub-codebook for the at least one multicast service. The blind detection may be based on (1) the indicated total number (i.e., no multicast DCI is missed by the UE) or (2) the indicated total number and the number of the at least one multicast service (e.g., the sum of the indicated total number and the product of the number of the at least one multicast service and the size of a DL DAI field (e.g., 2 bits) in a DCI format).

In some embodiments of the present disclosure, the multicast sub-codebook related indicator may indicate whether to multiplex the latest received DL DAIs for the at least one multicast service (e.g., all the configured G-RNTIs) on the PUSCH.

In the case that the indicator indicates to multiplex the latest received DL DAIs on the PUSCH, in addition to the multicast HARQ-ACK sub-codebook(s) for the at least one multicast service, the UE may generate a HARQ-ACK sub-codebook indicating the latest received DL DAIs for the at least one multicast service (e.g., all the configured G-RNTIs).

For example, the UE may generate each multicast HARQ-ACK sub-codebook according to the received and decoded multicast PDSCHs. The UE may concatenate all the multicast HARQ-ACK sub-codebooks into one (e.g., in an ascending order of G-RNTI values). The UE may further generate an additional HARQ-ACK sub-codebook indicating the latest received DL DAIs for the at least one multicast service (e.g., all the configured G-RNTIs). The descriptions of the additional HARQ-ACK sub-codebook as described above may apply here, and thus are omitted herein. The additional HARQ-ACK sub-codebook may be encoded separately from the concatenated multicast HARQ-ACK sub-codebooks. Then, the additional HARQ-ACK sub-codebook and the concatenated multicast HARQ-ACK sub-codebooks are multiplexed on the scheduled PUSCH.

The BS may detect the additional HARQ-ACK sub-codebook first to determine the size of each multicast HARQ-ACK sub-codebook, and then detect each multicast HARQ-ACK sub-codebook based on the corresponding determined size.

In the case that the indicator indicates to not multiplex the latest received DL DAIs on the PUSCH, the UE may generate a multicast HARQ-ACK sub-codebook for each of the at least one multicast service (e.g., all the configured G-RNTIs). The UE may concatenate all the multicast HARQ-ACK sub-codebooks into one (e.g., in an ascending order of G-RNTI values) and multiplex the concatenated multicast HARQ-ACK sub-codebooks on the scheduled PUSCH. The BS may detect the multicast HARQ-ACK sub-codebook for each of the at least one multicast service.

In some embodiments of the present disclosure, the multicast sub-codebook related indicator may indicate the number of multicast HARQ-ACK sub-codebooks to be multiplexed on the PUSCH.

In response to receiving the DCI format scheduling the PUSCH, the UE may generate the multicast HARQ-ACK sub-codebooks according to the indicated number of multicast HARQ-ACK sub-codebooks.

In some embodiments, the indicated number of multicast HARQ-ACK sub-codebooks may be equal to the number of multicast RNTIs (e.g., G-RNTIs) configured for the UE. When the UE has not received any multicast DCI format with a CRC scrambled by a specific multicast RNTI (e.g., G-RNTI #A) of the configured multicast RNTIs for scheduling a PDSCH or indicating an SPS PDSCH release with HARQ-ACK feedback enabled and has not received any SPS PDSCH scrambled by G-RNTI #A with HARQ-ACK feedback enabled, the UE may generate a multicast HARQ-ACK sub-codebook (e.g., sub-codebook #A) for the multicast service associated with G-RNTI #A. In some examples, sub-codebook #A may include a single NACK bit. The UE may multiplex sub-codebook #A on the scheduled PUSCH.

In some embodiments, the indicated number of multicast HARQ-ACK sub-codebooks may be smaller than the number of multicast RNTIs (e.g., G-RNTIs) configured for the UE. When the UE has not received any multicast DCI format with a CRC scrambled by a specific multicast RNTI (e.g., G-RNTI #B) of the configured multicast RNTIs for scheduling a PDSCH or indicating an SPS PDSCH release with HARQ-ACK feedback enabled and has not received any SPS PDSCH scrambled by G-RNTI #B with HARQ-ACK feedback enabled, the UE may not generate a multicast HARQ-ACK sub-codebook for the multicast service associated with G-RNTI #B. The UE may not multiplex HARQ-ACK information bits for the multicast service associated with G-RNTI #B on the scheduled PUSCH.

Embodiments of the present disclosure provide solutions for HARQ-ACK codebook generation when a Type-2 HARQ-ACK codebook is configured for multicast.

For example, a UE may be configured with a Type-2 HARQ-ACK codebook for a multicast service and may be configured with at least one multicast RNTI for at least one multicast service.

In some embodiments of the present disclosure, when the UE has not received any multicast DCI format with a CRC scrambled by a specific multicast RNTI (e.g., G-RNTI #C) of the configured multicast RNTIs for scheduling a PDSCH or indicating an SPS PDSCH release with HARQ-ACK feedback enabled and has not received any SPS PDSCH scrambled by G-RNTI #C with HARQ-ACK feedback enabled, the UE may generate a multicast HARQ-ACK sub-codebook (e.g., sub-codebook #C) for the multicast service associated with G-RNTI #C. In some examples, sub-codebook #C may include a single NACK bit.

In some embodiments of the present disclosure, when the UE has not received any multicast DCI format with a CRC scrambled by a specific multicast RNTI (e.g., G-RNTI #D) of the configured multicast RNTIs for scheduling a PDSCH or indicating an SPS PDSCH release with HARQ-ACK feedback enabled and has not received any SPS PDSCH scrambled by G-RNTI #D with HARQ-ACK feedback enabled, the UE may not generate a multicast HARQ-ACK sub-codebook for the multicast service associated with G-RNTI #D.

FIG. 5 illustrates a flow chart of an exemplary procedure 500 for wireless communications in accordance with some embodiments of the present disclosure. Details described in all of the foregoing embodiments of the present disclosure are applicable for the embodiments shown in FIG. 5. In some examples, the procedure may be performed by a UE, for example, UE 101 in FIG. 1.

Referring to FIG. 5, in operation 511, a UE may receive, from a BS, a DCI format scheduling a PUSCH. The DCI format may include an indicator associated with HARQ-ACK feedback to be multiplexed on the PUSCH. In operation 513, the UE may generate, based on the indicator, a plurality of multicast HARQ-ACK sub-codebooks for a plurality of multicast services. In operation 515, the UE may transmit, to the BS, the plurality of multicast HARQ-ACK sub-codebooks on the PUSCH.

The descriptions with respect to the multicast sub-codebook related indicator in the present disclosure may apply to the indicator. For example, in some embodiments, the indicator may be a DAI (e.g., UL DAI). For example, the DCI format may include a (UL) DAI field or another field indicating the indicator.

In some embodiments, the UE may determine a multicast HARQ-ACK sub-codebook size based on the indicator. The plurality of multicast HARQ-ACK sub-codebooks may have the same size as the determined multicast HARQ-ACK sub-codebook size.

In some embodiments, the UE may receive a first set of PDSCHs associated with a first multicast service of the plurality of multicast services. Generating the plurality of multicast HARQ-ACK sub-codebooks may include: generating a first multicast HARQ-ACK sub-codebook comprising HARQ-ACK information bits for the first set of PDSCHs; in response to the size of the first multicast HARQ-ACK sub-codebook being smaller than the determined multicast HARQ-ACK sub-codebook size, adding a padding bit(s) to the first multicast HARQ-ACK sub-codebook to align the size of the first multicast HARQ-ACK sub-codebook with the determined multicast HARQ-ACK sub-codebook size; and in response to the size of the first multicast HARQ-ACK sub-codebook being larger than the determined multicast HARQ-ACK sub-codebook size, performing HARQ-ACK bundling among the HARQ-ACK information bits for the first set of PDSCHs to align the size of the first multicast HARQ-ACK sub-codebook with the determined multicast HARQ-ACK sub-codebook size.

In some embodiments, the indicator may indicate the multicast HARQ-ACK sub-codebook size from a set of possible multicast HARQ-ACK sub-codebook sizes. The set of possible multicast HARQ-ACK sub-codebook sizes may be configured by the BS or predefined.

In some embodiments, generating the plurality of multicast HARQ-ACK sub-codebooks may include generating a multicast HARQ-ACK sub-codebook of a first multicast service of the plurality of multicast services based on the indicator, and wherein the first multicast service is associated with a lowest RNTI among RNTIs of the plurality of multicast services.

In some embodiments, the indicator may indicate a total number of multicast PDCCH monitoring occasions in which a PDSCH transmission associated with a PDCCH or a PDCCH indicating an SPS PDSCH release for the plurality of multicast services is present on a serving cell of the UE.

In some embodiments, the UE may determine whether a last multicast DCI format for one of the plurality of multicast services is missed by the UE based on the indicator.

In some embodiments, generating the plurality of multicast HARQ-ACK sub-codebooks may include in response to determining that a last multicast DCI format for one of the plurality of multicast services is missed, generating each of the plurality of multicast HARQ-ACK sub-codebooks according to a multicast HARQ-ACK sub-codebook size. The multicast HARQ-ACK sub-codebook size may be configured by the BS or predefined.

In some embodiments, generating the plurality of multicast HARQ-ACK sub-codebooks may include in response to determining that a last multicast DCI format for one of the plurality of multicast services is missed, generating the plurality of multicast HARQ-ACK sub-codebooks according to the indicated total number. The UE may generate a first HARQ-ACK sub-codebook indicating the latest received DL DAI for each of the plurality of multicast services; and transmit, to the BS, the first HARQ-ACK sub-codebook. The descriptions with respect to the additional HARQ-ACK sub-codebook in the present disclosure may apply to the first HARQ-ACK sub-codebook.

In some embodiments, the indicator may indicate whether to multiplex the latest received DL DAIs for the plurality of multicast services on the PUSCH. In the case that the indicator indicates to multiplex the latest received DL DAIs for the plurality of multicast services on the PUSCH, the UE may generate a first HARQ-ACK sub-codebook indicating the latest received DL DAIs for the plurality of multicast services. The UE may separately encode the plurality of multicast HARQ-ACK sub-codebooks and the first HARQ-ACK sub-codebook; and transmit the first HARQ-ACK sub-codebook on the PUSCH.

In some embodiments, the latest received DL DAIs for the plurality of multicast services are arranged in the first HARQ-ACK sub-codebook according to a predefined order (e.g., an ascending order) of RNTIs associated with the plurality of multicast services.

In some embodiments, the indicator may indicate the number of multicast HARQ-ACK sub-codebooks to be multiplexed on the PUSCH. The number of the plurality of multicast HARQ-ACK sub-codebooks may be equal to the indicated number of multicast HARQ-ACK sub-codebooks.

In some embodiments, in response to the indicated number of multicast HARQ-ACK sub-codebooks being equal to a number of multicast RNTIs (e.g., G-RNTIs) configured for the UE, generating the plurality of multicast HARQ-ACK sub-codebooks may include generating a first multicast HARQ-ACK sub-codebook for a multicast service associated with a first multicast RNTI of the configured multicast RNTIs, in the case that the UE has not received any multicast DCI format with a CRC scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled. The first multicast HARQ-ACK sub-codebook may include a single negative ACK bit.

In some embodiments, in response to the indicated number of multicast HARQ-ACK sub-codebooks being smaller than a number of multicast RNTIs (e.g., G-RNTIs) configured for the UE, the plurality of multicast HARQ-ACK sub-codebooks may not include a multicast HARQ-ACK sub-codebook for a multicast service associated with a first multicast RNTI of the configured multicast RNTIs, in the case that the UE has not received any multicast DCI format with a CRC scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled.

It should be appreciated by persons skilled in the art that the sequence of the operations in exemplary procedure 500 may be changed and some of the operations in exemplary procedure 500 may be eliminated or modified, without departing from the spirit and scope of the disclosure.

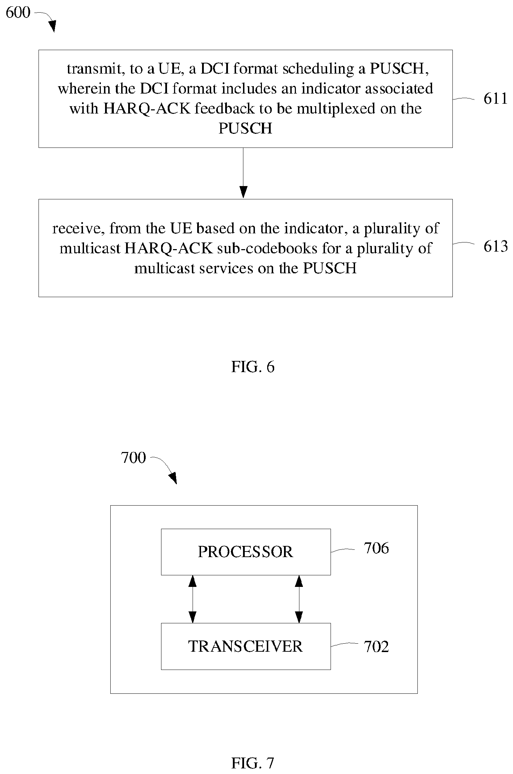

FIG. 6 illustrates a flow chart of an exemplary procedure 600 for wireless communications in accordance with some embodiments of the present disclosure. Details described in all of the foregoing embodiments of the present disclosure are applicable for the embodiments shown in FIG. 6. In some examples, the procedure may be performed by a BS, for example, BS 102 in FIG. 1.

Referring to FIG. 6, in operation 611, a BS may transmit, to a UE, a DCI format scheduling a PUSCH. The DCI format may include an indicator associated with HARQ-ACK feedback to be multiplexed on the PUSCH. In operation 613, the BS may receive, from the UE based on the indicator, a plurality of multicast HARQ-ACK sub-codebooks for a plurality of multicast services on the PUSCH.

The descriptions with respect to the multicast sub-codebook related indicator in the present disclosure may apply to the indicator. For example, in some embodiments, the indicator may be a DAI (e.g., UL DAI). For example, the DCI format may include a (UL) DAI field or another field indicating the indicator.

In some embodiments, the plurality of multicast HARQ-ACK sub-codebooks may have the same HARQ-ACK sub-codebook size, which is indicated by the indicator.

In some embodiments, the indicator may indicate a HARQ-ACK sub-codebook size from a set of possible multicast HARQ-ACK sub-codebook sizes. The BS may transmit the set of possible multicast HARQ-ACK sub-codebook sizes to the UE or the set of possible multicast HARQ-ACK sub-codebook sizes may be predefined.

In some embodiments, the BS may: determine a corresponding multicast HARQ-ACK sub-codebook size associated with each of the plurality of multicast services. The HARQ-ACK sub-codebook size indicated by the indicator may be: a largest value among the determined multicast HARQ-ACK sub-codebook sizes associated with the plurality of multicast services; a smallest value in the set of possible multicast HARQ-ACK sub-codebook sizes which is larger than or equal to the largest value among the determined multicast HARQ-ACK sub-codebook sizes associated with the plurality of multicast services; or a scaled value based on the determined multicast HARQ-ACK sub-codebook sizes associated with the plurality of multicast services. The scaled value may be an average value of the determined multicast HARQ-ACK sub-codebook sizes associated with the plurality of multicast services.

In some embodiments, the indicator may indicate: a maximum value of the latest transmitted DL DAIs for the plurality of multicast services; a minimum value of the latest transmitted DL DAIs for the plurality of multicast services; or a scaled value based on the latest transmitted DL DAIs for the plurality of multicast services. The scaled value may be an average value of the latest transmitted DL DAIs for the plurality of multicast services.

In some embodiments, the plurality of multicast HARQ-ACK sub-codebooks may include a first multicast HARQ-ACK sub-codebook of a first multicast service of the plurality of multicast services. The first multicast service is associated with a lowest RNTI among RNTIs of the plurality of multicast services, and the size of the first multicast HARQ-ACK sub-codebook is based on the indicator.

In some embodiments, the indicator may indicate: a total number of multicast PDCCH monitoring occasions in which a PDSCH transmission associated with a PDCCH or a PDCCH indicating an SPS PDSCH release for the plurality of multicast services is present on a serving cell of the UE.

In some embodiments, the BS may receive, from the UE, a first HARQ-ACK sub-codebook indicating the latest received DL DAI for each of the plurality of multicast services. The descriptions with respect to the additional HARQ-ACK sub-codebook in the present disclosure may apply to the first HARQ-ACK sub-codebook.

In some embodiments, the BS may perform a blind detection to receive the plurality of multicast HARQ-ACK sub-codebooks. The blind detection may be based on at least one of: the indicated total number; a multicast HARQ-ACK sub-codebook size and the number of the plurality of multicast services; or the indicated total number and the number of the plurality of multicast services. The BS may transmit the multicast HARQ-ACK sub-codebook size to the UE or the multicast HARQ-ACK sub-codebook size may be predefined.

In some embodiments, the indicator may indicate whether to multiplex the latest received DL DAIs for the plurality of multicast services on the PUSCH. In the case that the indicator indicates to multiplex the latest received DL DAIs for the plurality of multicast services on the PUSCH, the BS may receive a first HARQ-ACK sub-codebook indicating the latest received DL DAIs for the plurality of multicast services. The plurality of multicast HARQ-ACK sub-codebooks and the first HARQ-ACK sub-codebook may be separately encoded.

In some embodiments, the latest received DL DAIs for the plurality of multicast services may be arranged in the first HARQ-ACK sub-codebook according to a predefined order (e.g., an ascending order) of RNTIs associated with the plurality of multicast services.

In some embodiments, the indicator may indicate the number of multicast HARQ-ACK sub-codebooks to be multiplexed on the PUSCH. The number of the plurality of multicast HARQ-ACK sub-codebooks may be equal to the indicated number of multicast HARQ-ACK sub-codebooks.

In some embodiments, in response to the indicated number of multicast HARQ-ACK sub-codebooks being equal to a number of multicast RNTIs configured for the UE, the plurality of multicast HARQ-ACK sub-codebooks may include a first multicast HARQ-ACK sub-codebook for a multicast service associated with a first multicast RNTI of the configured multicast RNTIs, in the case that the UE has not received any multicast DCI format with a CRC scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled. The first multicast HARQ-ACK sub-codebook may include a single negative ACK bit.

In some embodiments, in response to the indicated number of multicast HARQ-ACK sub-codebooks being smaller than a number of multicast RNTIs configured for the UE, the plurality of multicast HARQ-ACK sub-codebooks may not include a multicast HARQ-ACK sub-codebook for a multicast service associated with a first multicast RNTI of the configured multicast RNTIs, in the case that the UE has not received any multicast DCI format with a CRC scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled.

It should be appreciated by persons skilled in the art that the sequence of the operations in exemplary procedure 600 may be changed and some of the operations in exemplary procedure 600 may be eliminated or modified, without departing from the spirit and scope of the disclosure.

FIG. 7 illustrates a block diagram of an exemplary apparatus 700 according to some embodiments of the present disclosure. As shown in FIG. 7, the apparatus 700 may include at least one processor 706 and at least one transceiver 702 coupled to the processor 706. The apparatus 700 may be a UE or a BS.

Although in this figure, elements such as the at least one transceiver 702 and processor 706 are described in the singular, the plural is contemplated unless a limitation to the singular is explicitly stated. In some embodiments of the present application, the transceiver 702 may be divided into two devices, such as a receiving circuitry and a transmitting circuitry. In some embodiments of the present application, the apparatus 700 may further include an input device, a memory, and/or other components.

In some embodiments of the present application, the apparatus 700 may be a UE. The transceiver 702 and the processor 706 may interact with each other so as to perform the operations with respect to the UE described in FIGS. 1-6. In some embodiments of the present application, the apparatus 700 may be a BS. The transceiver 702 and the processor 706 may interact with each other so as to perform the operations with respect to the BS described in FIGS. 1-6.

In some embodiments of the present application, the apparatus 700 may further include at least one non-transitory computer-readable medium.

For example, in some embodiments of the present disclosure, the non-transitory computer-readable medium may have stored thereon computer-executable instructions to cause the processor 706 to implement the method with respect to the UE as described above. For example, the computer-executable instructions, when executed, cause the processor 706 interacting with transceiver 702 to perform the operations with respect to the UE described in FIGS. 1-6.

In some embodiments of the present disclosure, the non-transitory computer-readable medium may have stored thereon computer-executable instructions to cause the processor 706 to implement the method with respect to the BS as described above. For example, the computer-executable instructions, when executed, cause the processor 706 interacting with transceiver 702 to perform the operations with respect to the BS described in FIGS. 1-6.

Those having ordinary skill in the art would understand that the operations or steps of a method described in connection with the aspects disclosed herein may be embodied directly in hardware, in a software module executed by a processor, or in a combination of the two. A software module may reside in RAM memory, flash memory, ROM memory, EPROM memory, EEPROM memory, registers, a hard disk, a removable disk, a CD-ROM, or any other form of storage medium known in the art. Additionally, in some aspects, the operations or steps of a method may reside as one or any combination or set of codes and/or instructions on a non-transitory computer-readable medium, which may be incorporated into a computer program product.

While this disclosure has been described with specific embodiments thereof, it is evident that many alternatives, modifications, and variations may be apparent to those skilled in the art. For example, various components of the embodiments may be interchanged, added, or substituted in other embodiments. Also, all of the elements of each figure are not necessary for the operation of the disclosed embodiments. For example, one of ordinary skill in the art of the disclosed embodiments would be enabled to make and use the teachings of the disclosure by simply employing the elements of the independent claims. Accordingly, embodiments of the disclosure as set forth herein are intended to be illustrative, not limiting.

In this document, the terms "includes," "including," or any other variation thereof, are intended to cover a non-exclusive inclusion, such that a process, method, article, or apparatus that includes a list of elements does not include only those elements but may include other elements not expressly listed or inherent to such process, method, article, or apparatus. An element proceeded by "a," "an," or the like does not, without more constraints, preclude the existence of additional identical elements in the process, method, article, or apparatus that includes the element. Also, the term "another" is defined as at least a second or more. The term "having" and the like, as used herein, are defined as "including." Expressions such as "A and/or B" or "at least one of A and B" may include any and all combinations of words enumerated along with the expression. For instance, the expression "A and/or B" or "at least one of A and B" may include A, B, or both A and B. The wording "the first," "the second" or the like is only used to clearly illustrate the embodiments of the present application, but is not used to limit the substance of the present application.

## Claims

1. A user equipment, UE, (101) for wireless communication, the UE (101) being configured to:
receive (511), from a base station, BS, (102), a downlink control information, DCI, format scheduling a physical uplink shared channel, PUSCH, wherein the DCI format comprises an indicator associated with hybrid automatic repeat request acknowledgement, HARQ-ACK, feedback to be multiplexed on the PUSCH;
generate (513), based on the indicator, a plurality of multicast HARQ-ACK sub-codebooks for a plurality of multicast services; and
transmit (515), to the BS (102), the plurality of multicast HARQ-ACK sub-codebooks on the PUSCH;
**characterized in that** the UE (101) is further configured to determine a multicast HARQ-ACK sub-codebook size based on the indicator, and the plurality of multicast HARQ-ACK sub-codebooks have the same size as the determined multicast HARQ-ACK sub-codebook size.

2. The UE (101) of claim 1, wherein the UE is further configured
to receive a first set of physical downlink shared channels, PDSCHs, associated with a first multicast service of the plurality of multicast services; and
wherein the UE is further configured to generate the plurality of multicast HARQ-ACK sub-codebooks by:
generating a first multicast HARQ-ACK sub-codebook comprising HARQ-ACK information bits for the first set of PDSCHs;
in response to the size of the first multicast HARQ-ACK sub-codebook being smaller than the determined multicast HARQ-ACK sub-codebook size, adding a padding bit(s) to the first multicast HARQ-ACK sub-codebook to align the size of the first multicast HARQ-ACK sub-codebook with the determined multicast HARQ-ACK sub-codebook size; and
in response to the size of the first multicast HARQ-ACK sub-codebook being larger than the determined multicast HARQ-ACK sub-codebook size, performing HARQ-ACK bundling among the HARQ-ACK information bits for the first set of PDSCHs to align the size of the first multicast HARQ-ACK sub-codebook with the determined multicast HARQ-ACK sub-codebook size.

3. The UE (101) of claim 1, wherein the indicator indicates the multicast HARQ-ACK sub-codebook size from a set of possible multicast HARQ-ACK sub-codebook sizes; and
wherein the set of possible multicast HARQ-ACK sub-codebook sizes is configured by the BS (102) or predefined.

4. The UE (101) of claim 1, wherein the UE is further configured to generate the plurality of multicast HARQ-ACK sub-codebooks by generating a multicast HARQ-ACK sub-codebook of a first multicast service of the plurality of multicast services based on the indicator, and wherein the first multicast service is associated with a lowest radio network temporary identifier, RNTI, among RNTIs of the plurality of multicast services.

5. The UE (101) of claim 1, wherein the indicator indicates a total number of multicast physical downlink control channel, PDCCH, monitoring occasions in which a PDSCH transmission associated with a PDCCH or a PDCCH indicating a semi-persistent scheduling, SPS, PDSCH release for the plurality of multicast services is present on a serving cell of the UE (101).

6. The UE (101) of claim 5, wherein the UE is further configured to cause the UE (101) to determine whether a last multicast DCI format for one of the plurality of multicast services is missed by the UE (101) based on the indicator; and
wherein the UE is further configured to generate the plurality of multicast HARQ-ACK sub-codebooks by, in response to determining that a last multicast DCI format for one of the plurality of multicast services is missed, generating each of the plurality of multicast HARQ-ACK sub-codebooks according to a multicast HARQ-ACK sub-codebook size.

7. The UE (101) of claim 6, wherein the UE is further configured to generate the plurality of multicast HARQ-ACK sub-codebooks by, in response to determining that a last multicast DCI format for one of the plurality of multicast services is missed, generating the plurality of multicast HARQ-ACK sub-codebooks according to the indicated total number; and
wherein the UE is further configured to: generate a first HARQ-ACK sub-codebook indicating the latest received downlink, DL, downlink assignment index, DAI, for each of the plurality of multicast services; and
transmit, to the BS (102), the first HARQ-ACK sub-codebook.

8. The UE (101) of claim 1, wherein the indicator indicates whether to multiplex the latest received DL DAIs for the plurality of multicast services on the PUSCH.

9. The UE (101) of claim 8, wherein in the case that the indicator indicates to multiplex the latest received DL DAIs for the plurality of multicast services on the PUSCH, the at least one processor (706) is configured to cause the UE (101) to generate a first HARQ-ACK sub-codebook indicating the latest received DL DAIs for the plurality of multicast services.

10. The UE (101) of claim 1, wherein the indicator indicates the number of multicast HARQ-ACK sub-codebooks to be multiplexed on the PUSCH.

11. The UE (101) of claim 10, wherein in response to the indicated number of multicast HARQ-ACK sub-codebooks being equal to a number of multicast RNTIs configured for the UE (101), the UE is further configured to generate the plurality of multicast HARQ-ACK sub-codebooks by:
generating a first multicast HARQ-ACK sub-codebook for a multicast service associated with a first multicast RNTI of the configured multicast RNTIs, in the case that the UE (101) has not received any multicast DCI format with a cyclic redundancy check, CRC, scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled,
wherein the first multicast HARQ-ACK sub-codebook includes a single negative ACK bit.

12. The UE (101) of claim 10, wherein in response to the indicated number of multicast HARQ-ACK sub-codebooks being smaller than a number of multicast RNTIs configured for the UE (101), the plurality of multicast HARQ-ACK sub-codebooks does not comprise:
a multicast HARQ-ACK sub-codebook for a multicast service associated with a first multicast RNTI of the configured multicast RNTIs, in the case that the UE (101) has not received any multicast DCI format with a CRC scrambled by the first multicast RNTI for scheduling a PDSCH or indicating an SPS PDSCH release with HARQ-ACK feedback enabled and has not received any SPS PDSCH scrambled by the first multicast RNTI with HARQ-ACK feedback enabled.

13. The UE (101) of claim 1, wherein the indicator is a downlink assignment index, DAI.

14. A base station, BS, (102), for wireless communication, the BS (102) being configured to:
transmit (611), to a user equipment, UE, (101), a downlink control information, DCI, format scheduling a physical uplink shared channel, PUSCH, wherein the DCI format comprises an indicator associated with hybrid automatic repeat request acknowledgement, HARQ-ACK, feedback to be multiplexed on the PUSCH; and
receive (613), from the UE (101) based on the indicator, a plurality of multicast HARQ-ACK sub-codebooks for a plurality of multicast services on the PUSCH, wherein the plurality of multicast HARQ-ACK sub-codebooks have the same size which is based on the indicator.

15. A method performed by a user equipment, UE, (101), the method comprising:
receiving (511), from a base station, BS, a downlink control information, DCI, format scheduling a physical uplink shared channel, PUSCH, wherein the DCI format comprises an indicator associated with hybrid automatic repeat request acknowledgement, HARQ-ACK, feedback to be multiplexed on the PUSCH;
generating (513), based on the indicator, a plurality of multicast HARQ-ACK sub-codebooks for a plurality of multicast services; and
transmitting (515), to the BS, the plurality of multicast HARQ-ACK sub-codebooks on the PUSCH;
wherein the UE (101) determines a multicast HARQ-ACK sub-codebook size based on the indicator, and the plurality of multicast HARQ-ACK sub-codebooks have the same size as the determined multicast HARQ-ACK sub-codebook size.

## Patentansprüche

1. Benutzergerät (UE) (101) zur drahtlosen Kommunikation, wobei das UE (101) zu Folgendem konfiguriert ist:
Empfangen (511) eines Formats für Downlink-Steuerinformationen (DCI) von einer Basisstation (BS) (102), das die Zeitplanung eines physischen, gemeinsam genutzten Uplink-Kanals (PUSCH) festlegt, wobei das DCI-Format einen Indikator umfasst, der einer HARQ-ACK-Rückmeldung (Hybrid Automatic Repeat Request Acknowledgement) zugeordnet ist, die über den PUSCH zu multiplexieren ist;
Erzeugen (513) einer Vielzahl von Multicast-HARQ-ACK-Teilcodebüchern auf Grundlage des Indikators für eine Vielzahl von Multicast-Diensten; und
Übertragen (515) der Vielzahl von Multicast-HARQ-ACK-Teilcodebüchern über den PUSCH an die BS (102);
**dadurch gekennzeichnet, dass** das UE (101) ferner dazu konfiguriert ist, auf Grundlage des Indikators eine Multicast-HARQ-ACK-Teilcodebuch-Größe zu bestimmen, und dass die Vielzahl von Multicast-HARQ-ACK-Teilcodebüchern dieselbe Größe wie die bestimmte Multicast-HARQ-ACK-Teilcodebuch-Größe aufweist.

2. UE (101) nach Anspruch 1, wobei das UE ferner dazu konfiguriert ist, einen ersten Satz physischer, gemeinsam genutzter Downlink-Kanäle (PDSCH) zu empfangen, der einem ersten Multicast-Dienst der Vielzahl von Multicast-Diensten zugeordnet ist; und
wobei das UE ferner dazu konfiguriert ist, die Vielzahl von Multicast-HARQ-ACK-Teilcodebüchern durch Folgendes zu erzeugen:
Erzeugen eines ersten Multicast-HARQ-ACK-Teilcodebuchs, das HARQ-ACK-Informationsbits für den ersten Satz von PDSCH umfasst;
als Reaktion darauf, dass die Größe des ersten Multicast-HARQ-ACK-Teilcodebuchs kleiner als die bestimmte Multicast-HARQ-ACK-Teilcodebuch-Größe ist, Hinzufügen eines oder mehrerer Auffüllbits zu dem ersten Multicast-HARQ-ACK-Teilcodebuch, um die Größe des ersten Multicast-HARQ-ACK-Teilcodebuchs an die bestimmte Multicast-HARQ-ACK-Teilcodebuch-Größe anzupassen; und
als Reaktion darauf, dass die Größe des ersten Multicast-HARQ-ACK-Teilcodebuchs größer ist als die bestimmte Multicast-HARQ-ACK-Teilcodebuch-Größe, Durchführen einer HARQ-ACK-Bündelung unter den HARQ-ACK-Informationsbits für den ersten Satz von PDSCH, um die Größe des ersten Multicast-HARQ-ACK-Teilcodebuchs an die bestimmte Multicast-HARQ-ACK-Teilcodebuch-Größe anzupassen.

3. UE (101) nach Anspruch 1, wobei der Indikator die Multicast-HARQ-ACK-Teilcodebuch-Größe aus einem Satz möglicher Multicast-HARQ-ACK-Teilcodebuch-Größen angibt; und
wobei der Satz möglicher Multicast-HARQ-ACK-Teilcodebuch-Größen durch die BS (102) konfiguriert oder vordefiniert wird.

4. UE (101) nach Anspruch 1, wobei das UE ferner dazu konfiguriert ist, die Vielzahl von Multicast-HARQ-ACK-Teilcodebüchern durch Erzeugen eines Multicast-HARQ-ACK-Teilcodebuchs eines ersten Multicast-Dienstes der Vielzahl von Multicast-Diensten auf Grundlage des Indikators zu erzeugen, und wobei der erste Multicast-Dienst der niedrigsten temporären Funknetz-Kennung (RNTI) unter den RNTI der Vielzahl von Multicast-Diensten zugeordnet ist.

5. UE (101) nach Anspruch 1, wobei der Indikator eine Gesamtzahl von Multicast-PDCCH-Überwachungsgelegenheiten angibt, bei denen eine einem PDCCH zugeordnete PDSCH-Übertragung oder ein PDCCH, der eine Freigabe eines PDSCH mit semi-persistenter Zeitplanung (SPS) für die Vielzahl von Multicast-Diensten angibt, auf einer bedienenden Zelle des UE (101) vorliegt.

6. UE (101) nach Anspruch 5, wobei das UE (101) ferner dazu konfiguriert ist, das UE (101) zu veranlassen, auf Grundlage des Indikators zu bestimmen, ob ein letztes Multicast-DCI-Format für einen der Vielzahl von Multicast-Diensten von dem UE (101) übersehen wurde; und
wobei das UE ferner dazu konfiguriert ist, die Vielzahl von Multicast-HARQ-ACK-Teilcodebüchern durch Erzeugen jedes der Vielzahl aus Multicast-HARQ-ACK-Teilcodebüchern gemäß einer Multicast-HARQ-ACK-Teilcodebuch-Größe als Reaktion auf das Bestimmen, dass ein letztes Multicast-DCI-Format für einen der Vielzahl von Multicast-Diensten übersehen wurde, zu erzeugen.

7. UE (101) nach Anspruch 6, wobei das UE ferner dazu konfiguriert ist, die Vielzahl von Multicast-HARQ-ACK-Teilcodebüchern durch Erzeugen der Vielzahl von Multicast-HARQ-ACK-Teilcodebüchern gemäß der angegebenen Gesamtzahl als Reaktion auf das Bestimmen, dass ein letztes Multicast-DCI-Format für einen der Vielzahl von Multicast-Diensten übersehen wurde, zu erzeugen; und
wobei das UE ferner zu Folgendem konfiguriert ist:
Erzeugen eines ersten HARQ-ACK-Teilcodebuchs, das den zuletzt empfangenen Downlink-Zuweisungsindex (DL-DAI) für jeden der Vielzahl von Multicast-Diensten angibt; und
Übertragen des ersten HARQ-ACK-Teilcodebuchs an die BS (102).

8. UE (101) nach Anspruch 1, wobei der Indikator angibt, ob die zuletzt empfangenen DL-DAI für die Vielzahl von Multicast-Diensten über den PUSCH zu multiplexieren sind.

9. UE (101) nach Anspruch 8, wobei in dem Fall, dass der Indikator angibt, die zuletzt empfangenen DL-DAI für die Vielzahl von Multicast-Diensten über den PUSCH zu multiplexen, der mindestens eine Prozessor (706) dazu konfiguriert ist, das UE (101) zu veranlassen, ein erstes HARQ-ACK-Teilcodebuch zu erzeugen, das die zuletzt empfangenen DL-DAI für die Vielzahl von Multicast-Diensten angibt.

10. UE (101) nach Anspruch 1, wobei der Indikator die Anzahl der Multicast-HARQ-ACK-Teilcodebücher angibt, die über den PUSCH zu multiplexieren sind.

11. UE (101) nach Anspruch 10, wobei, wenn die angegebene Anzahl von Multicast-HARQ-ACK-Teilcodebüchern der Anzahl der für das UE (101) konfigurierten Multicast-RNTI entspricht, das UE ferner dazu konfiguriert ist, die Vielzahl von Multicast-HARQ-ACK-Teilcodebüchern durch Erzeugen eines ersten Multicast-HARQ-ACK-Teilcodebuchs für einen Multicast-Dienst zu erzeugen, der einer ersten Multicast-RNTI der konfigurierten Multicast-RNTI zugeordnet ist, falls das UE (101) kein Multicast-DCI-Format mit einer durch die erste Multicast-RNTI verwürfelten zyklischen Redundanzprüfung (CRC) zum Festlegen der Zeitplanung eines PDSCH oder zum Angeben einer SPS-PDSCH-Freigabe mit aktivierter HARQ-ACK-Rückmeldung empfangen hat und keinen durch die erste Multicast-RNTI verwürfelten SPS-PDSCH mit aktivierter HARQ-ACK-Rückmeldung empfangen hat,
wobei das erste Multicast-HARQ-ACK-Teilcodebuch ein einzelnes negatives ACK-Bit beinhaltet.

12. UE (101) nach Anspruch 10, wobei als Reaktion darauf, dass die angegebene Anzahl von Multicast-HARQ-ACK-Teilcodebüchern kleiner ist als die Anzahl der für das UE (101) konfigurierten Multicast-RNTI, die Vielzahl von Multicast-HARQ-ACK-Teilcodebüchern Folgendes nicht umfasst:
ein Multicast-HARQ-ACK-Teilcodebuch für einen Multicast-Dienst, der einer ersten Multicast-RNTI der konfigurierten Multicast-RNTI zugeordnet ist, falls das UE (101) kein Multicast-DCI-Format mit einer durch die erste Multicast-RNTI verwürfelten CRC zum Festlegen der Zeitplanung eines PDSCH oder zum Angeben einer SPS-PDSCH-Freigabe mit aktivierter HARQ-ACK-Rückmeldung empfangen hat und keinen durch die erste Multicast-RNTI verwürfelten SPS-PDSCH mit aktivierter HARQ-ACK-Rückmeldung empfangen hat.

13. UE (101) nach Anspruch 1, wobei der Indikator ein Downlink-Zuweisungsindex (DAI) ist.

14. Basisstation (BS) (102) zur drahtlosen Kommunikation, wobei die BS (102) zu Folgendem konfiguriert ist:
Übertragen (611) eines Formats für Downlink-Steuerinformationen (DCI) an ein Benutzergerät (UE) (101), das die Zeitplanung eines physischen, gemeinsam genutzten Uplink-Kanals (PUSCH) festlegt, wobei das DCI-Format einen Indikator umfasst, der einer HARQ-ACK-Rückmeldung (Hybrid Automatic Repeat Request Acknowledgement) zugeordnet ist, die über den PUSCH zu multiplexieren ist; und
Empfangen (613) einer Vielzahl von Multicast-HARQ-ACK-Teilcodebüchern von dem UE (101) auf Grundlage des Indikators für eine Vielzahl von Multicast-Diensten über den PUSCH, wobei die Vielzahl von Multicast-HARQ-ACK-Teilcodebüchern dieselbe, auf dem Indikator basierende Größe aufweist.

15. Verfahren, das von einem Benutzergerät (UE) (101) durchgeführt wird, wobei das Verfahren Folgendes umfasst:
Empfangen (511) eines Formats für Downlink-Steuerinformationen (DCI) von einer Basisstation (BS), das die Zeitplanung eines physischen, gemeinsam genutzten Uplink-Kanals (PUSCH) festlegt, wobei das DCI-Format einen Indikator umfasst, der einer HARQ-ACK-Rückmeldung (Hybrid Automatic Repeat Request Acknowledgement) zugeordnet ist, die über den PUSCH zu multiplexieren ist;
Erzeugen (513) einer Vielzahl von Multicast-HARQ-ACK-Teilcodebüchern auf Grundlage des Indikators für eine Vielzahl von Multicast-Diensten; und
Übertragen (515) der Vielzahl von Multicast-HARQ-ACK-Teilcodebüchern über den PUSCH an die BS;
wobei das UE (101) auf Grundlage des Indikators eine Multicast-HARQ-ACK-Teilcodebuch-Größe bestimmt und die Vielzahl von Multicast-HARQ-ACK-Teilcodebüchern dieselbe Größe wie die bestimmte Multicast-HARQ-ACK-Teilcodebuch-Größe aufweist.

## Revendications

1. Équipement utilisateur (UE) (101) pour la communication sans fil, l'UE (101) étant configuré pour :
recevoir (511), en provenance d'une station de base (BS) (102), un format d'informations de commande de liaison descendante (DCI) planifiant un canal partagé de liaison montante physique (PUSCH), dans lequel le format DCI comprend un indicateur associé à une rétroaction d'accusé de réception de demande de répétition automatique hybride (HARQ-ACK) à multiplexer sur le PUSCH ;
générer (513), sur la base de l'indicateur, une pluralité de sous-livres de codes HARQ-ACK de multidiffusion pour une pluralité de services de multidiffusion ; et
transmettre (515), à la BS (102), la pluralité de sous-livres de codes HARQ-ACK de multidiffusion sur le PUSCH ;
**caractérisé par le fait que** l'UE (101) est en outre configuré pour
déterminer, sur la base de l'indicateur, une taille de sous-livre de codes HARQ-ACK de multidiffusion, la pluralité de sous-livres de codes HARQ-ACK de multidiffusion ayant la même taille que la taille de sous-livre de codes HARQ-ACK de multidiffusion déterminée.

2. UE (101) selon la revendication 1, dans lequel l'UE est en outre configuré pour recevoir un premier ensemble de canaux partagés de liaison descendante physiques (PDSCH) associés à un premier service de multidiffusion de la pluralité de services de multidiffusion ; et
dans lequel l'UE est en outre configuré pour générer la pluralité de sous-livres de codes HARQ-ACK de multidiffusion par :
la génération d'un premier sous-livre de codes HARQ-ACK de multidiffusion comprenant des bits d'information HARQ-ACK pour le premier ensemble de PDSCH ;
en réponse au fait que la taille du premier sous-livre de codes HARQ-ACK de multidiffusion est inférieure à la taille de sous-livre de codes HARQ-ACK de multidiffusion déterminée, l'ajout d'un ou de plusieurs bits de remplissage au premier sous-livre de codes HARQ-ACK de multidiffusion, afin d'aligner la taille du premier sous-livre de codes HARQ-ACK de multidiffusion sur la taille de sous-livre de codes HARQ-ACK de multidiffusion déterminée ; et,
en réponse au fait que la taille du premier sous-livre de codes HARQ-ACK de multidiffusion est supérieure à la taille de sous-livre de codes HARQ-ACK de multidiffusion déterminée, la réalisation d'un regroupement HARQ-ACK parmi les bits d'information HARQ-ACK pour le premier ensemble de PDSCH, afin d'aligner la taille du premier sous-livre de codes HARQ-ACK de multidiffusion sur la taille de sous-livre de codes HARQ-ACK de multidiffusion déterminée.

3. UE (101) selon la revendication 1, dans lequel l'indicateur indique la taille de sous-livre de codes HARQ-ACK de multidiffusion parmi un ensemble de tailles possibles de sous-livre de codes HARQ-ACK de multidiffusion ; et
dans lequel l'ensemble de tailles possibles de sous-livre de codes HARQ-ACK de multidiffusion est configuré par la BS (102) ou prédéfini.

4. UE (101) selon la revendication 1, dans lequel l'UE est en outre configuré pour générer la pluralité de sous-livres de codes HARQ-ACK de multidiffusion par la génération, sur la base de l'indicateur, d'un sous-livre de codes HARQ-ACK de multidiffusion d'un premier service de multidiffusion de la pluralité de services de multidiffusion, le premier service de multidiffusion étant associé à un identifiant temporaire de réseau radio (RNTI) le plus faible parmi les RNTI de la pluralité de services de multidiffusion.

5. UE (101) selon la revendication 1, dans lequel l'indicateur indique un nombre total d'occasions de surveillance du canal de commande de liaison descendante physique (PDCCH) de multidiffusion dans lesquelles une transmission PDSCH associée à un PDCCH ou à un PDCCH indiquant une libération de PDSCH à planification semi-persistante (SPS) pour la pluralité de services de multidiffusion est présente sur une cellule de service de l'UE (101).

6. UE (101) selon la revendication 5, dans lequel l'UE est en outre configuré pour déterminer, sur la base de l'indicateur, si un dernier format DCI de multidiffusion pour un service de multidiffusion parmi la pluralité de services de multidiffusion a été reçu ou non par l'UE (101) ; et
dans lequel l'UE est en outre configuré pour générer la pluralité de sous-livres de codes HARQ-ACK de multidiffusion par la génération, en réponse à la détermination qu'un dernier format DCI de multidiffusion pour un service de multidiffusion parmi la pluralité de services de multidiffusion n'a pas été reçu, de chacun de la pluralité de sous-livres de codes HARQ-ACK de multidiffusion selon une taille de sous-livre de codes HARQ-ACK de multidiffusion.

7. UE (101) selon la revendication 6, dans lequel l'UE est en outre configuré pour générer la pluralité de sous-livres de codes HARQ-ACK de multidiffusion par la génération, en réponse à la détermination qu'un dernier format DCI de multidiffusion pour un service de multidiffusion parmi la pluralité de services de multidiffusion n'a pas été reçu, de la pluralité de sous-livres de codes HARQ-ACK de multidiffusion selon le nombre total indiqué ; et
dans lequel l'UE est en outre configuré pour :
générer un premier sous-livre de codes HARQ-ACK indiquant le dernier indice d'attribution de liaison descendante (DL) (DAI) reçu pour chacun de la pluralité de services de multidiffusion ; et
transmettre, à la BS (102), le premier sous-livre de codes HARQ-ACK.

8. UE (101) selon la revendication 1, dans lequel l'indicateur indique s'il faut multiplexer les derniers DL DAI reçus pour la pluralité de services de multidiffusion sur le PUSCH.

9. UE (101) selon la revendication 8, dans lequel lorsque l'indicateur indique de multiplexer les DL DAI reçus pour la pluralité de services de multidiffusion sur le PUSCH, ledit au moins un processeur (706) est configuré pour amener l'UE (101) à générer un premier sous-livre de codes HARQ-ACK indiquant les derniers DL DAI reçus pour la pluralité de services de multidiffusion.

10. UE (101) selon la revendication 1, dans lequel l'indicateur indique le nombre de sous-livres de codes HARQ-ACK de multidiffusion à multiplexer sur le PUSCH.

11. UE (101) selon la revendication 10, dans lequel en réponse au fait que le nombre indiqué de sous-livres de codes HARQ-ACK de multidiffusion est égal au nombre de RNTI de multidiffusion configurés pour l'UE (101), l'UE est en outre configuré pour générer la pluralité de sous-livres de codes HARQ-ACK de multidiffusion par :
la génération d'un premier sous-livre de codes HARQ-ACK de multidiffusion pour un service de multidiffusion associé à un premier RNTI de multidiffusion parmi les RNTI de multidiffusion configurés, lorsque l'UE (101) n'a reçu aucun format DCI de multidiffusion assorti d'un contrôle de redondance cyclique (CRC) brouillé par le premier RNTI de multidiffusion pour planifier un PDSCH ou indiquer une libération de SPS PDSCH avec rétroaction HARQ-ACK activée, et n'a reçu aucun SPS PDSCH brouillé par le premier RNTI de multidiffusion avec rétroaction HARQ-ACK activée,
dans lequel le premier sous-livre de codes HARQ-ACK de multidiffusion comprend un seul bit ACK négatif.

12. UE (101) selon la revendication 10, dans lequel en réponse au fait que le nombre indiqué de sous-livres de codes HARQ-ACK de multidiffusion est inférieur à un nombre de RNTI de multidiffusion configurés pour l'UE (101), la pluralité de sous-livres de codes HARQ-ACK de multidiffusion ne comprend pas :
un sous-livre de codes HARQ-ACK de multidiffusion pour un service de multidiffusion associé à un premier RNTI de multidiffusion parmi les RNTI de multidiffusion configurés, lorsque l'UE (101) n'a reçu aucun format DCI de multidiffusion assorti d'un CRC brouillé par le premier RNTI de multidiffusion pour planifier un PDSCH ou indiquer une libération de SPS PDSCH avec rétroaction HARQ-ACK activée, et n'a reçu aucun SPS PDSCH brouillé par le premier RNTI de multidiffusion avec rétroaction HARQ-ACK activée.

13. UE (101) selon la revendication 1, dans lequel l'indicateur est un indice d'attribution de liaison descendante (DAI).

14. Station de base (BS) (102) pour la communication sans fil, la BS (102) étant configurée pour :
transmettre (611), à un équipement utilisateur (UE) (101), un format d'informations de commande de liaison descendante (DCI) planifiant un canal partagé de liaison montante physique (PUSCH), dans lequel le format DCI comprend un indicateur associé à une rétroaction d'accusé de réception de demande de répétition automatique hybride (HARQ-ACK) à multiplexer sur le PUSCH ; et
recevoir (613), en provenance de l'UE (101), sur la base de l'indicateur, une pluralité de sous-livres de codes HARQ-ACK de multidiffusion pour une pluralité de services de multidiffusion sur le PUSCH, la pluralité de sous-livres de codes HARQ-ACK de multidiffusion présentant la même taille qui est basée sur l'indicateur.

15. Procédé mis en œuvre par un équipement utilisateur (UE) (101), le procédé comprenant :
recevoir (511), en provenance d'une station de base (BS), un format d'informations de commande de liaison descendante (DCI) planifiant un canal partagé de liaison montante physique (PUSCH), dans lequel le format DCI comprend un indicateur associé à une rétroaction d'accusé de réception de demande de répétition automatique hybride (HARQ-ACK) à multiplexer sur le PUSCH ;
générer (513), sur la base de l'indicateur, une pluralité de sous-livres de codes HARQ-ACK de multidiffusion pour une pluralité de services de multidiffusion ; et
transmettre (515), à la BS (102), la pluralité de sous-livres de codes HARQ-ACK de multidiffusion sur le PUSCH ;
dans lequel l'UE (101) détermine, sur la base de l'indicateur, une taille de sous-livre de codes HARQ-ACK de multidiffusion, et la pluralité de sous-livres de codes HARQ-ACK de multidiffusion ont la même taille que la taille de sous-livre de codes HARQ-ACK de multidiffusion déterminée.
